(19) Europäisches Patentamt
European Patent Office
Office européen des brevets

(11) **EP 4 685 204 A1**

(12) **EUROPÄISCHE PATENTANMELDUNG**

(43) Veröffentlichungstag:
28.01.2026 Patentblatt 2026/05

(21) Anmeldenummer: 24190805.2

(22) Anmeldetag: **25.07.2024**

(51) Internationale Patentklassifikation (IPC):
**C09J 133/24** (2006.01)

(52) Gemeinsame Patentklassifikation (CPC):
(C-Sets verfügbar)
**C09J 133/24; C09J 5/00; C09J 7/10; C09J 7/29; C09J 7/30;** C08K 5/3445; C08K 2201/001; C09J 2203/326; C09J 2203/354; C09J 2301/124; C09J 2301/314; C09J 2301/408; C09J 2301/502; C09J 2400/163; C09J 2433/00 (Forts.)

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **tesa SE**
**22848 Norderstedt (DE)**

(72) Erfinder:
• **FOMENKO, Eugen**
**Norderstedt (DE)**

• **SCHMIDT, Waldemar**
**Norderstedt (DE)**
• **FÜRST, Andreas**
**Norderstedt (DE)**
• **FRITZ, Margarethe**
**Norderstedt (DE)**
• **KRETZMER, Ralf**
**Norderstedt (DE)**
• **BROSIUS, Victor**
**Norderstedt (DE)**
• **MOON, Sie-Seong**
**Norderstedt (DE)**

(74) Vertreter: **tesa SE**
**Hugo-Kirchberg-Straße 1**
**22848 Norderstedt (DE)**

(54) **KLEBEMASSE, KLEBEBAND, VERKLEBTER VERBUND UND VERFAHREN ZUM ELEKTRISCHEN LÖSEN DES VERKLEBTEN VERBUNDES**

(57) Die Erfindung betrifft eine Klebemasse, ein Klebeband, einen verklebten Verbund, ein Verfahren zum elektrischen Lösen des verklebten Verbundes und die Verwendung der Klebemasse zur Verklebung von Bauteilen in elektronischen Geräten, Automobilen, medizinischen Geräten und zahnmedizinischen Geräten.

Die Klebemasse enthält
a) wenigstens ein Poly(meth)acrylat A, wobei das Poly(meth)acrylat A durch Polymerisation einer Monomerzusammensetzung hergestellt ist, die mehr als 15 Gew.-% eines oder mehrerer stickstoffhaltigen Monomere enthält, wobei die Monomerzusammensetzung optional eines oder mehrere Alkylenoxid-haltige Poly(meth)acrylat-Monomere enthält, unter der Bedingung, dass in diesem Fall keines der Alkylenoxid-haltigen Poly(meth)acrylat-Monomere ein Molekulargewicht von mehr als 305 g/mol aufweist; und
b) wenigstens ein Elektrolyt, wobei der Elektrolyt ausgewählt ist aus der Gruppe bestehend aus ionischen Flüssigkeiten und Metallsalzen, wobei ionische Flüssigkeiten besonders bevorzugt sind.

Fig. 6

EP 4 685 204 A1

(52) Gemeinsame Patentklassifikation (CPC): (Forts.)

C-Sets
**C09J 133/24, C08K 5/3445;**
**C09J 133/24, C08L 53/02, C08K 5/3445;**
C08F 220/1804, C08F 220/1808, C08F 220/54,
C08F 220/06;
C08F 220/1804, C08F 220/1808, C08F 220/54,
C08F 220/283;
C08F 222/102, C08F 220/1808, C08F 220/54,
C08F 220/06;
C08F 222/102, C08F 220/1808, C08F 220/54,
C08F 220/283

**Beschreibung**

Die Erfindung betrifft eine Klebemasse, ein Klebeband, einen verklebten Verbund, ein Verfahren zum elektrischen Lösen des verklebten Verbundes und die Verwendung der Klebemasse zur Verklebung von Bauteilen in elektronischen Geräten, Automobilen, medizinischen Geräten und zahnmedizinischen Geräten.

Neuerdings besteht ein erhöhtes Interesse an "Debonding-on-Demand"-Funktionalitäten, welche aufgrund von Umweltgesetzen bzw. des Bewusstseins der Endkunden für Nachhaltigkeit und einem steigenden Kostendruck bei der Herstellung zustande kommen. Die Anwendungsszenarien für Debonding-Prozesse werden in Nacharbeiten, Reparieren, Recycling und Verarbeitungshilfen klassifiziert.

Die Debonding-Technologien zielen darauf, ein kohäsives Spalten der Klebstoffschicht oder ein adhäsives Ablösen der Klebstoffschicht vom Substrat zu erzielen. Während ersteres eine Reinigung des Substrats vor einer Wiederverklebung erfordert, kommt letzteres ohne eine solche aus.

Adhäsiv lösende Technologien, die die geforderte hohe und dauerhaft zuverlässige Verklebungsfestigkeit garantieren, sind jedoch in der Regel schwieriger zu verwirklichen oder dauern in der Anwendung sehr lange, wie z.B. das Ablösen mittels eines unterwandernden Lösemittels.

So sind derzeit insbesondere in der Nacharbeit oder Reparatur von elektronischen Geräten, wie z.B. Smartphones und Tablet-Computern, vorwiegend kohäsiv spaltende Klebverbindungen im Einsatz, vielfach ausgeführt als Haftklebebänder, die über eine Temperaturerhöhung so weit in ihrer Kohäsion gemindert werden, dass eine manuelle, kohäsive Trennung der Verklebung erfolgen kann. Umfangreiche Nacharbeiten zur Vorbereitung der mit Klebstoffresten verunreinigten Substratoberfläche für eine Wiederverklebung sind die Folge.

Neben wärmevermittelten Trennverfahren werden elektrische Trennverfahren diskutiert. So offenbart beispielsweise die EP 3031875 B1 die Herabsetzung der Klebkraft einer Acrylat-Klebemasse durch das Anlegen einer Spannung.

Die WO 2023175424 A1 offenbart die Herabsetzung der Klebkraft einer Klebemasse durch das Anlegen einer Spannung, wobei die Klebemasse polymere Mikroballons auf Basis von polaren Monomeren sowie eine Polymermatrix auf Basis von Makromeren und optional polaren Monomeren, wie Acrylamiden, enthält.

Der vorliegenden Erfindung liegt die Aufgabe zugrunde, eine Klebemasse bereitzustellen, die gegenüber dem Stand der Technik eine stärkere Herabsetzung der Klebkraft durch das Anlegen einer Spannung ermöglicht. Die Klebemasse soll sich somit elektrisch besser ablösen lassen können und zudem gleichzeitig eine hohe Ausgangsklebkraft aufweisen. Gleichzeitig soll das Wiederablösen möglichst einfach und sauber erfolgen können. Die Klebemasse soll dabei auch in vergleichsweise hohen Schichtdicken, wie beispielsweise 150 $\mu$m, elektrisch ablösbar sein.

Eine weitere Aufgabe besteht darin, die Lagerungsstabilität, insbesondere unter feucht-warmen Bedingungen, einer solchen Klebemasse zu optimieren. Zudem soll die Klebemasse in Kombination mit metallischen Trägern einsetzbar sein können und hierbei zu einer verringerten Korrosion des metallischen Trägers beitragen.

Eine weitere Aufgabe besteht darin, eine entsprechende Klebemasse mit den oben genannten Vorteilen bereitzustellen, die zudem robust ist gegenüber dem Zusatz von Additiven, wobei insbesondere die elektrische Ablösbarkeit durch den Zusatz von Additiven nicht negativ beeinträchtigt sein soll.

Eine ergänzende Aufgabe ist es, ein entsprechendes vorteilhaftes Klebeband bereitzustellen. Es ist eine zusätzliche Aufgabe, einen verklebten Verbund und ein Verfahren zum Wiederablösen der durch die Klebemasse bzw. das Klebeband hergestellten Klebeverbindung anzugeben.

Zudem ist es eine Aufgabe der Erfindung, eine Verwendung der bereitzustellenden Klebemassen bzw. Klebebänder zur Verklebung von zwei oder mehr Substraten bereitzustellen.

Die vorstehend genannten Aufgaben werden durch den Gegenstand der Erfindung gelöst, wie er in den Ansprüchen definiert ist. Bevorzugte erfindungsgemäße Ausgestaltungen ergeben sich aus den weiteren, abhängigen Ansprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Damit sind von der Erfindung Kombinationen einzelner Merkmale miteinander und hierbei auch unterschiedlicher Bevorzugungsstufen umfasst. Somit ist von der Erfindung beispielsweise die Kombination eines ersten als "bevorzugt" gekennzeichneten Merkmals mit einem zweiten als "besonders bevorzugt" gekennzeichneten Merkmals umfasst. Hierbei sind auch im Rahmen von "Ausführungsformen" bezeichnete Gegenstände ebenfalls unterschiedlicher Bevorzugungsstufen mit umfasst. Merkmale bevorzugter Klebebänder, verklebten Verbunde sowie Verwendungen und Verfahren ergeben sich aus den Merkmalen bevorzugter Klebemassen. Merkmale bevorzugter verklebter Verbunde, Verwendungen und Verfahren ergeben sich zudem aus den Merkmalen bevorzugter Klebebänder.

Die erfindungsgemäße Klebemasse enthält

a) wenigstens ein Poly(meth)acrylat A, wobei das Poly(meth)acrylat A durch Polymerisation einer Monomerzusammensetzung hergestellt ist, die mehr als 15 Gew.-% eines oder mehrerer stickstoffhaltigen Monomere enthält, wobei die Monomerzusammensetzung optional eines oder mehrere Alkylenoxid-haltige (Meth)acrylat-Monomere enthält, unter der Bedingung, dass in diesem Fall keines der Alkylenoxid-haltigen (Meth)acrylat-Monomere ein Molekulargewicht von mehr als 305 g/mol aufweist; und

b) wenigstens ein Elektrolyt, wobei der Elektrolyt ausgewählt ist aus der Gruppe bestehend aus ionischen Flüssigkeiten und Metallsalzen, wobei ionische Flüssigkeiten besonders bevorzugt sind.

"Gew.-%" steht dabei wie üblich für Gewichtsprozent. Sämtliche Angaben in Gew.-%, die die Monomere der Monomerzusammensetzung betreffen, aus der das Poly(meth)acrylat A hergestellt ist, beziehen sich auf das Gesamtgewicht der Monomerzusammensetzung, wobei nur die Monomere betrachtet werden und sonstige Substanzen, wie Vernetzer, Initiatoren nicht zum Gesamtgewicht der Monomerzusammensetzung beitragen, auf das sich die Angabe "Gew.-%" bezieht.

Der Ausdruck "wenigstens ein" oder das Äquivalente "eines oder mehrere" bezieht sich dabei in branchenüblicher Weise auf die chemische Natur der entsprechenden Substanz und nicht auf deren Stoffmenge. Dem Fachmann ist klar, dass somit unter dem Ausdruck "ein Poly(meth)acrylat A" eine Vielzahl von Polymerketten zu verstehen ist. Im Rahmen der vorliegenden Erfindung weist ein Poly(meth)acrylat A, charakterisiert durch seine zugrunde liegende Monomerzusammensetzung, dabei insbesondere eine Molekulargewichtsverteilung auf.

Mittels des enthaltenen Elektrolyten ist die Klebemasse auch nach dem Verkleben durch Anlegen einer Spannung elektrisch ablösbar.

Überraschenderweise hat sich herausgestellt, dass sich eine Klebemasse enthaltend wenigstens ein Poly(meth)acrylat A auf Basis von mehr als 15 Gew.-% stickstoffhaltigen Monomeren und wenigstens ein Elektrolyt ohne großen Kraftaufwand von verklebten Substraten elektrisch durch Anlegen einer Spannung auf einfache, saubere und schnelle Weise wieder ablösen lässt, wobei die Herabsetzung der Klebkraft durch das Anlegen der Spannung im Vergleich zum Stand der Technik, insbesondere im Vergleich zur WO 2023175424 A1, verbessert ist. Dabei ist es überraschenderweise möglich, die Klebemasse auch in vergleichsweise hohen Schichtdicken, wie beispielsweise 150 μm, zu verkleben und dennoch eine sehr gute elektrische Wiederablösbarkeit zu erzielen. Zudem zeigt die erfindungsgemäße Klebemasse eine überraschend hohe Lagerungsstabilität und ist ebenso überraschend robust gegenüber dem Zusatz von Additiven, wie Klebharzen und Kautschuken. Klebebänder umfassend die erfindungsgemäße Klebemasse und metallische Komponenten, wie eine oder mehrere metallische Trägerschichten, zeigen ein verbessertes Korrosionsverhalten der metallischen Schicht(en).

Im Folgenden wird die erfindungsgemäße Klebemasse näher ausgeführt.

Die Klebemasse enthält a) wenigstens ein Poly(meth)acrylat A auf Basis von mehr als 15 Gew.-% stickstoffhaltigen Monomeren und b) wenigstens ein Elektrolyt, dessen Menge wie im Rahmen der vorliegenden Erfindung angegeben insbesondere in Bezug zu der Menge an Poly(meth)acrylat A steht, wobei im Fall von zwei oder mehreren verschiedenen Poly(meth)acrylaten A die Gesamtmenge an Poly(meth)acrylat A das Bezugssystem darstellt.

Unter einem "Elektrolyt" wird vorliegend gemäß dem allgemeinen fachmännischen Verständnis eine chemische Verbindung verstanden, die im festen, flüssigen oder gelösten Zustand in Ionen dissoziiert ist und die sich unter dem Einfluss eines elektrischen Feldes gerichtet bewegt.

Der Elektrolyt ist ausgewählt aus der Gruppe bestehend aus ionischen Flüssigkeiten und Metallsalzen, wobei ionische Flüssigkeiten besonders bevorzugt sind.

Insbesondere durch eine oder mehrere ionische Flüssigkeiten als Elektrolyt lässt sich das Klebeband auf einfache Weise wieder ablösen, ohne dass die Klebeigenschaften des Klebebandes negativ beeinträchtigt sind. Ionische Flüssigkeiten haben dabei den Vorteil, dass sie sich gut und homogen in der Polymermatrix von Klebemassen verteilen lassen und das Wiederablösen schneller funktioniert als mit anderen Elektrolyten.

Ferner sind die Bestandteile von ionischen Flüssigkeiten, insbesondere bei Raumtemperatur, nicht flüchtig. Ionische Flüssigkeiten sind zudem vergleichsweise hitzestabil und nicht brennbar sowie chemisch vergleichsweise stabil.

Ionische Flüssigkeiten sind im Rahmen der vorliegenden Erfindung Salze, die bei Raumtemperatur, also 23 °C, flüssig sind. Ionische Flüssigkeiten enthalten dementsprechend Anionen und Kationen.

Ionische Flüssigkeiten sind daher als Elektrolyt im Rahmen des erfindungsgemäßen Trennverfahrens bzw. Verfahrens zum elektrischen Lösen besonders gut geeignet.

Wenn eine Spannung angelegt wird, wandern die Anionen zur anodischen Seite und die Kationen zur kathodischen Seite. Ohne sich hierauf einschränken zu wollen, kann mechanistisch davon ausgegangen werden, dass es hierdurch zu einer Absenkung der Klebkraft der die ionische Flüssigkeit enthaltenden Klebemasse an wenigstens ein Substrat kommt, wodurch eine adhäsive Spaltung zwischen der Klebemasse und dem wenigstens einen Substrat erzielt wird.

Im Rahmen der vorliegenden Erfindung sind prinzipiell alle ionischen Flüssigkeiten geeignet.

Die im Rahmen der vorliegenden Erfindung verwendeten ionischen Flüssigkeiten enthalten wenigstens ein Anion und wenigstens ein Kation. Hierbei ist es auch denkbar, dass die ionische Flüssigkeit zwei oder mehr Typen an Anionen und/oder zwei oder mehr Typen an Kationen umfasst. Ferner ist es denkbar, dass der Klebemasse zwei oder mehrere verschiedene ionische Flüssigkeiten zugegeben werden bzw. die Klebemasse dann zwei oder mehrere verschiedene ionische Flüssigkeiten enthält.

Bevorzugt ist das Anion der ionischen Flüssigkeit ausgewählt aus der Gruppe bestehend aus $Br^-$, $AlCl_4^-$, $Al_2Cl_7^-$, $NO_3^-$, $BF_4^-$, $PF_6^-$, $CH_3COO^-$, $CF_3COO^-$, $CF_3CO_3^-$, $CF_3SO_3^-$, $(CF_3SO_2)_2N^-$, $(CF_3SO_2)_3C^-$, $AsF_6^-$, $SbF_6^-$, $CF_3(CF_2)_3SO_3^-$, $(CF_3CF_2SO_2)_2N^-$, $CF_3CF_2CF_2COO^-$, $N(CN)_2^-$ und $(FSO_2)_2N^-$.

Besonders bevorzugt ist das Anion ausgewählt aus $(CF_3SO_2)_2N^-$, $N(CN)_2^-$, $(FSO_2)_2N^-$ und $PF_6^-$ und Tetrafluorborat ($BF_4^-$).

Hiermit wird eine besonders hohe Reduzierung der Klebkraft durch Anlegen einer Spannung und damit eine besonders gute elektrische Ablösbarkeit der erfindungsgemäßen Klebemasse bzw. des erfindungsgemäßen Klebebandes erzielt. Insbesondere gelingt das (Wieder-)Ablösen mit diesem Anion besonders schnell und es verbleiben keine Rückstände.

Wiederum bevorzugt sind das Anion $N(CN)_2^-$ (Dicyanamid-Anion) und/oder $PF_6^-$ (Hexafluorophosphat-Anion).

Bevorzugt ist das Kation der ionischen Flüssigkeit ausgewählt aus der Gruppe bestehend aus Kationen auf Imidazolium-Basis, Kationen auf Pyridinium-Basis, Kationen auf Pyrrolidin-Basis und Kationen auf Ammonium-Basis.

Besonders bevorzugt ist das Kation ausgewählt aus der Gruppe bestehend aus Kationen auf Imidazolium-Basis.

Hiermit wird eine besonders hohe Reduzierung der Klebkraft durch Anlegen einer Spannung und damit eine besonders gute elektrische Ablösbarkeit der erfindungsgemäßen Klebemasse bzw. des erfindungsgemäßen Klebebandes erzielt. Insbesondere gelingt das (Wieder-)Ablösen mit diesem Anion besonders schnell und es verbleiben keine Rückstände.

Ganz besonders bevorzugt ist das Kation ausgewählt aus der Gruppe bestehend aus 1-Ethyl-3-methylimidazolium und 1-Butyl-3-methylimidazolium.

Besonders bevorzugt ist der Elektrolyt ausgewählt aus der Gruppe bestehend aus den ionischen Flüssigkeiten 1-Ethyl-3-methylimidazolium-dicyanamid, 1-Ethyl-3-methylimidazolium-bis(trifluormethylsulfonyl)imid (EMIM-TFSI), 1-Ethyl-3-methylimidazolium-bis(fluorsulfonyl)imid (EMIM-FSI), 1-Butyl-3-methylimidazolium-hexafluorophosphat und 1-Ethyl-3-methylimidazolium-tetrafluorborat.

Hiermit wird eine besonders hohe Reduzierung der Klebkraft durch Anlegen einer Spannung und damit eine besonders gute elektrische Ablösbarkeit der erfindungsgemäßen Klebemasse bzw. des erfindungsgemäßen Klebebandes erzielt. Insbesondere gelingt das (Wieder-)Ablösen mit diesem Anion besonders schnell und es verbleiben keine Rückstände.

Ganz besonders bevorzugt ist der Elektrolyt ausgewählt aus der Gruppe bestehend aus 1-Ethyl-3-methylimidazolium-dicyanamid und 1-Butyl-3-methylimidazolium-hexafluorophosphat.

Die erfindungsgemäße Klebemasse enthält bevorzugt 0,05 bis 15 Gewichtsteile, besonders bevorzugt 0,1 bis 15 Gewichtsteile, ganz besonders bevorzugt 2,5 bis 15 Gewichtsteile, wiederum bevorzugt 2,5 bis 11 Gewichtsteile, an Elektrolyten, bevorzugt ionischen Flüssigkeiten, bezogen auf 100 Gewichtsteile Poly(meth)acrylat A.

Mit einer derartigen bevorzugten bzw. besonders bevorzugten Menge an Elektrolyten, insbesondere ionischen Flüssigkeiten, wird ein vergleichsweise schnelles elektrisches Ablösen ermöglicht, wobei gleichzeitig die Adhäsion der Klebemasse an insbesondere wenigstens ein Substrat vor dem Ablösen nicht negativ beeinträchtigt ist.

Insbesondere ist dies in einzelnen Ausführungsformen bereits mit 0,1 Gewichtsteilen an Elektrolyten, insbesondere ionischen Flüssigkeiten, gelungen.

Die erfindungsgemäße Klebemasse enthält a) wenigstens ein Poly(meth)acrylat A, wobei das Poly(meth)acrylat A durch Polymerisation einer Monomerzusammensetzung hergestellt ist, die mehr als 15 Gew.-% eines oder mehrerer stickstoffhaltigen Monomere enthält, wobei die Monomerzusammensetzung optional eines oder mehrere Alkylenoxid-haltige (Meth)acrylatMonomere enthält, unter der Bedingung, dass in diesem Fall keines der Alkylenoxid-haltigen (Meth)acrylat-Monomere ein Molekulargewicht von mehr als 305 g/mol aufweist.

Unter einem "Poly(meth)acrylat" wird ein Polymer verstanden, welches bevorzugt durch radikalische Polymerisation von Acryl- und/oder Methacrylmonomeren sowie gegebenenfalls weiteren, copolymerisierbaren Monomeren erhältlich ist. Insbesondere wird unter einem "Poly(meth)acrylat" ein Polymer verstanden, dessen Monomerbasis zu mindestens 50 Gew.-% aus Acrylsäure, Methacrylsäure, Acrylsäureestern und/oder Methacrylsäureestern besteht, wobei Acrylsäureester und/oder Methacrylsäureester zumindest anteilig, bevorzugt zu mindestens 30 Gew.-%, bezogen auf die gesamte Monomerbasis des betreffenden Polymers, enthalten sind, wobei das erfindungsgemäße enthaltene Poly(meth)acrylat A durch Polymerisation einer Monomerzusammensetzung hergestellt ist, die mehr als 15 Gew.-% eines oder mehrerer stickstoffhaltigen Monomere enthält.

Die mehr als 15 Gew.-% der stickstoffhaltigen Monomere zählen dabei nicht zwangsläufig zu den mindestens 50 Gew.-%, die ein "Poly(meth)acrylat" definieren, da erfindungsgemäß auch stickstoffhaltige Monomere umfasst sind, die keine (Meth)acrylate sind. In diesen Fällen enthält die Monomerzusammensetzung zusätzlich zu den 15 Gew.-% an stickstoffhaltigen Nicht-(Meth)acrylaten mindestens 50 Gew.-% aus Acrylsäure, Methacrylsäure, Acrylsäureestern und/oder Methacrylsäureestern.

Für den bevorzugten Fall, dass das wenigstens eine stickstoffhaltige Monomer wenigstens ein stickstoffhaltiges (Meth)acrylat-Monomer ist, stellen bevorzugt die mehr als 15 Gew.-% der stickstoffhaltigen (Meth)acrylat-Monomere als Acrylsäureester und/oder Methacrylsäureester einen Teil der mindestens 50 Gew.-%, die ein "Poly(meth)acrylat" definieren, dar.

In besonders bevorzugten Ausführungsformen der Erfindung sind jedoch sämtliche Monomere der Monomerzusammensetzung Acrylsäure, Methacrylsäure, Acrylsäureester und/oder Methacrylsäureester, wobei dann mehr als 15 Gew.-% der enthaltenen Monomere stickstoffhaltige (Meth)acrylat-Monome sind.

Das wenigstens eine Poly(meth)acrylat A stellt in der erfindungsgemäßen Klebemasse das Basispolymer dar. Sämtliche Mengen weiterer Bestandteile werden auf die Gesamtmenge an Poly(meth)acrylat A bezogen, wie oben für die Elektrolyten bereits erläutert.

Damit stellt das wenigstens eine Poly(meth)acrylat A insbesondere auch den Hauptbestandteil der erfindungsgemäßen Klebemasse dar.

Gemäß bevorzugter Ausführungsformen der Erfindung beträgt die Gesamtmenge an Poly(meth)acrylat A in der Klebemasse 60 bis 97 Gew.-%, besonders bevorzugt 70 bis 97 Gew.-%, bezogen auf das Gesamtgewicht der Klebemasse.

Die Glasübergangstemperatur, bestimmt gemäß DSC wie im Prüfmethodenteil unter "DSC" beschrieben, des wenigstens einen Poly(meth)acrylats A der erfindungsgemäßen Klebemasse beträgt bevorzugt < 8 °C (weniger als acht Grad Celsius), besonders bevorzugt zwischen +5 und -65 °C (zwischen plus fünf Grad und minus fünfundsechzig Grad Celsius).

Hierdurch wird ein besonders gutes Auffließverhalten der Klebemasse erzielt. Weiterhin ist es in dem genannten Bereich der Glasübergangstemperatur möglich, weitere Additive, wie Klebharze, hinzuzugeben und weiterhin die gewünschten Eigenschaften, wie insbesondere Haftklebrigkeit, beizubehalten.

Die Glasübergangstemperatur des Poly(meth)acrylats A wird insbesondere maßgeblich durch die Auswahl der Monomere bestimmt.

Erfindungsgemäß enthält die Monomerzusammensetzung mehr als 15 Gew.-% eines oder mehrerer stickstoffhaltiger Monomere und damit wenigstens eines stickstoffhaltigen Monomers.

Unter einem "stickstoffhaltigen Monomer" wird dabei eine chemische Verbindung verstanden, die wenigstens eine funktionelle Gruppe trägt, die wenigstens ein Stickstoffatom umfasst.

Bevorzugt ist das stickstoffhaltige Monomer oder wenigstens eines der stickstoffhaltigen Monomere der Monomerzusammensetzung ausgewählt aus der Gruppe bestehend aus stickstoffhaltigen (Meth)Acrylat-Monomeren, Vinylpyridin, 4-Vinylpyridin, N-Vinylphthalimid, N-Vinyllactam, N-Vinylpyrrolidon und N-Vinylformamid.

Bevorzugt sind stickstoffhaltige (Meth)Acrylat-Monomere. Somit ist das stickstoffhaltige Monomer oder wenigstens eines der stickstoffhaltigen Monomere der Monomerzusammensetzung bevorzugt ein stickstoffhaltiges (Meth) Acrylat-Monomer.

Unter einem "stickstoffhaltigen (Meth)Acrylat-Monomer" wird dabei eine chemische Verbindung verstanden, die wenigstens eine Methacrylat- oder wenigstens eine Acrylat-Funktion und zusätzlich eine funktionelle Gruppe trägt, die wenigstens ein Stickstoffatom umfasst. Gemäß bevorzugter Ausführungsformen der Erfindung ist das stickstoffhaltige (Meth)Acrylat-Monomer oder wenigstens eines der stickstoffhaltigen (Meth)Acrylat-Monomere der Monomerzusammensetzung ausgewählt aus der Gruppe bestehend aus (Meth)Acrylamiden, substituierten (Meth)Acrylamiden, Amino-(Meth)acrylaten, substituierten Amino-(Meth)acrylaten, (Meth)Acrylnitril, Cyanoalkyl(meth)acrylaten, 4-(Meth)Acryloylmorpholin.

Gemäß bevorzugter Ausführungsformen der Erfindung ist das stickstoffhaltige (Meth)Acrylat-Monomer oder wenigstens eines der stickstoffhaltigen (Meth)Acrylat-Monomere der Monomerzusammensetzung ausgewählt aus der Gruppe bestehend aus Cyanoethylacrylat, Cyanoethylmethacrylat, Diethylaminoethylacrylat, Diethylaminoethylmethacrylat, Dimethylaminoethylacrylat, Dimethylaminoethylmethacrylat, Dimethyl-aminopropylacrylamid, Dimethylaminopropylmethacrylamid, N-(1-Methylundecyl)acrylamid, N-(n-Butoxymethyl)acrylamid, N-(Butoxymethyl)methacrylamid, N-(Ethoxymethyl)acrylamid, N-(n-Octadecyl)acrylamid; N,N-Dialkyl-substituierten Amiden wie beispielsweise N,N-Dimethylacrylamid, N,N-Dimethylmethacrylamid, N,N-Diethylacrylamid und N,N-Diethylmethacrylamid, N-Benzylacrylamid, N-Isopropylacrylamid, N-tert-Butylacrylamid, N-tert-Octylacrylamid, N-Methylolacrylamid, N-Methylolmethacrylamid, 4-(Meth)Acryloylmorpholin, Acrylnitril und Methacrylnitril.

Gemäß besonders vorteilhafter Ausführungsformen enthält die Monomerzusammensetzung mehr als 15 Gew.-% wenigstens eines Acrylamids als stickstoffhaltiges (Meth)Acrylat-Monomer, wobei das Acrylamid bevorzugt ausgewählt ist aus der Gruppe bestehend aus Dimethyl-aminopropylacrylamid, Dimethylaminopropylmethacrylamid, N-(1-Methylundecyl)acrylamid, N-(n-Butoxymethyl)acrylamid, N-(Butoxymethyl)methacrylamid, N-(Ethoxymethyl)acrylamid, N-(n-Octadecyl)acrylamid, N,N-Dialkyl-substituierten Amiden wie beispielsweise N,N-Dimethylacrylamid, N,N-Dimethylmethacrylamid, N,N-Diethylacrylamid und N,N-Diethylmethacrylamid, N-Benzylacrylamid, N-Isopropylacrylamid, N-tert-Butylacrylamid, N-tert-Octylacrylamid, N-Methylolacrylamid, N-Methylolmethacrylamid.

Ganz besonders bevorzugt ist als stickstoffhaltiges (Meth)Acrylat-Monomer wenigstens ein substituiertes Acrylamid enthalten, welches ausgewählt ist aus der Gruppe bestehend aus N,N-Dimethylacrylamid (NNDMA) und N,N-Diethylacrylamid (NNDEA).

Gemäß besonders vorteilhafter Ausführungsformen enthält die Monomerzusammensetzung mehr als 15 Gew.-% des stickstoffhaltigen (Meth)Acrylat-Monomers N,N-Dimethylacrylamid.

Gemäß besonders vorteilhafter Ausführungsformen enthält die Monomerzusammensetzung mehr als 15 Gew.-% des stickstoffhaltigen (Meth)Acrylat-Monomers N,N-Diethylacrylamid.

Die Menge des stickstoffhaltigen Monomers oder der stickstoffhaltigen Monomere beträgt bevorzugt mehr als 15 Gew.-% und bis zu 55 Gew.-%, besonders bevorzugt bis zu 50 Gew.-%, bezogen auf das Gesamtgewicht der Monomerzusammensetzung.

Gemäß vorteilhafter Ausführungsformen der Erfindung beträgt die Menge an stickstoffhaltigen (Meth)Acrylat-Monomeren mehr als 25 Gew.-% und dabei bevorzugt bis zu 55 Gew.-%, besonders bevorzugt bis zu 50 Gew.-%, bezogen auf das Gesamtgewicht der Monomerzusammensetzung.

Gemäß vorteilhafter Ausführungsformen der Erfindung beträgt die Menge an stickstoffhaltigen (Meth)Acrylat-Monomeren mehr als 25 Gew.-% und dabei bevorzugt bis zu 55 Gew.-%, besonders bevorzugt bis zu 50 Gew.-%, und gleichzeitig ist als Elektrolyt wenigstens eine ionische Flüssigkeit in der Klebemasse enthalten, die das Anion $N(CN)_2^-$ als Bestandteil enthält, wie insbesondere und beispielsweise die ionische Flüssigkeit 1-Ethyl-3-methylimidazolium-dicyanamid. Bevorzugt ist das stickstoffhaltige Monomer dabei ein Acrylamid, insbesondere N,N-Dimethylacrylamid.

Hiermit wird überraschenderweise eine verbesserte Lagerungsstabilität unter feucht-warmen Bedingungen erzielt.

Gemäß weiterer vorteilhafter Ausführungsformen der Erfindung beträgt die Menge an stickstoffhaltigen (Meth) Acrylat-Monomeren mehr als 15 Gew.-% und dabei bevorzugt bis zu 25 Gew.-%, und gleichzeitig ist als Elektrolyt wenigstens eine ionische Flüssigkeit in der Klebemasse enthalten, die das Anion $PF_6^-$ als Bestandteil enthält, wie insbesondere und beispielsweise die ionische Flüssigkeit 1-Butyl-3-methylimidazolium-hexafluorophosphat. Bevorzugt ist das stickstoffhaltige Monomer dabei ein Acrylamid, insbesondere N,N-Dimethylacrylamid und/oder N,N-Diethylacrylamid.

Gemäß bevorzugter Ausführungsformen enthält das Poly(meth)acrylat A der Klebemasse zusätzlich zu dem stickstoffhaltigen Monomer weitere zumindest anteilig einpolymerisierte funktionelle Monomere, besonders bevorzugt Monomere wenigstens einer Sorte mit wenigstens einer funktionellen Gruppe, die ausgewählt ist aus der Gruppe bestehend aus Estergruppen, Carbonsäuregruppen, Sulfonsäuregruppen, Phosphonsäuregruppen, Hydroxygruppen, Säureanhydridgruppen, Alkylenoxid-Gruppen und Epoxidgruppen.

Die genannten funktionellen Gruppen mit Ausnahme von Epoxidgruppen weisen eine Reaktivität mit Epoxidgruppen auf, wodurch das Poly(meth)acrylat vorteilhaft einer thermischen Vernetzung mit eingebrachten Epoxiden zugänglich wird.

Gemäß vorteilhafter Ausführungsformen der Erfindung enthält die Monomerzusammensetzung 0 Gew.-% (Meth)Acrylsäure, also 0 Gew.-% Acrylsäure und 0 Gew.-% Methacrylsäure. Hiermit wird überraschenderweise eine hohe Lagerungsstabilität, insbesondere unter feucht-warmen Bedingungen, und eine besonders hohe Klebkraft nach Lagerung unter feucht-warmen Bedingungen erzielt. Bevorzugt enthält die Monomerzusammensetzung dabei mehr als 30 Gew.-%, besonders bevorzugt 30 bis 50 Gew.-%, wenigstens eines Acrylamids, insbesondere N,N-Dimethylacrylamid und/oder N,N-Diethylacrylamid, und 15 bis 25 Gew.-% wenigstens eines hydroxygruppenhaltigen (Meth)Acrylat-Monomers, insbesondere 4-Hydroxybutylacrylat (4-HBA).

Gemäß weiterer vorteilhafter Ausführungsformen der Erfindung enthält die Monomerzusammensetzung bis zu 4 Gew.-%, insbesondere 0,1 bis 4 Gew.-%, (Meth)Acrylsäure.

Gemäß vorteilhafter Ausführungsformen der Erfindung enthält die Monomerzusammensetzung 5 bis 35 Gew.-% wenigstens eines hydroxygruppenhaltigen (Meth)Acrylat-Monomers.

Gemäß vorteilhafter Ausführungsformen der Erfindung beträgt die Menge an hydroxygruppenhaltigen (Meth) Acrylat-Monomeren 5 bis 35 Gew.-% und dabei bevorzugt 15 bis 35 Gew.-%, und gleichzeitig ist als Elektrolyt wenigstens eine ionische Flüssigkeit in der Klebemasse enthalten, die das Anion $N(CN)_2^-$ als Bestandteil enthält, wie insbesondere und beispielsweise die ionische Flüssigkeit 1-Ethyl-3-methylimidazolium-dicyanamid.

Gemäß weiterer vorteilhafter Ausführungsformen der Erfindung beträgt die Menge an hydroxygruppenhaltigen (Meth)Acrylat-Monomeren 5 bis 35 Gew.-%, bevorzugt 5 bis 25 Gew.-%, besonders bevorzugt 5 bis 10 Gew.-%, und gleichzeitig ist als Elektrolyt wenigstens eine ionische Flüssigkeit in der Klebemasse enthalten, die das Anion $PF_6^-$ als Bestandteil enthält, wie insbesondere und beispielsweise die ionische Flüssigkeit 1-Butyl-3-methylimidazolium-hexafluorophosphat.

Bevorzugt ist das hydroxygruppenhaltige (Meth)Acrylat-Monomer ausgewählt aus der Gruppe bestehend aus 4-Hydroxybutylacrylat, 2-Hydroxyethylacrylat, 2-Hydroxypropylacrylat, 2-Hydroxybutylacrylat, 2-Hydroxyethylmethacrylat, 2-Hydroxypropylmethacrylat, 2-Hydroxybutylmethacrylat, 2-Hydroxyisopropylacrylat.

Besonders bevorzugt ist das hydroxygruppenhaltige (Meth)Acrylat-Monomer ausgewählt aus der Gruppe bestehend aus 4-Hydroxybutylacrylat, 2-Hydroxyisopropylacrylat und 2-Hydroxyethylacrylat.

Ganz besonders bevorzugt ist das hydroxygruppenhaltige (Meth)Acrylat-Monomer 4-Hydroxybutylacrylat (4-HBA).

Die Monomerzusammensetzung kann optional eines oder mehrere Alkylenoxid-haltige (Meth)acrylat-Monomere enthalten, unter der Bedingung, dass in diesem Fall keines der Alkylenoxid-haltigen (Meth)acrylat-Monomere ein Molekulargewicht von mehr als 305 g/mol aufweist.

Mit anderen Worten ist die Monomerzusammensetzung frei von Alkylenoxid-haltigen (Meth)acrylat-Monomeren mit einem Molekulargewicht von mehr als 305 g/mol.

Erfindungsgemäß ist damit auch eine Klebemasse enthaltend

a) wenigstens ein Poly(meth)acrylat A, wobei das Poly(meth)acrylat A durch Polymerisation einer Monomerzusammensetzung hergestellt ist, die mehr als 15 Gew.-% eines oder mehrerer stickstoffhaltigen (Meth)Acrylat-Monomere enthält, wobei die Monomerzusammensetzung frei von Alkylenoxid-haltigen (Meth)acrylat-Monomeren mit einem Molekulargewicht von mehr als 305 g/mol ist; und

b) wenigstens ein Elektrolyt, wobei der Elektrolyt ausgewählt ist aus der Gruppe bestehend aus ionischen Flüssigkeiten und Metallsalzen, wobei ionische Flüssigkeiten besonders bevorzugt sind.

Insbesondere ist nicht nur das Poly(meth)acrylat A frei von Alkylenoxid-haltigen (Meth)acrylatMonomeren mit einem Molekulargewicht von mehr als 305 g/mol sondern auch die erfindungsgemäße Klebemasse als solche.

Insbesondere wird mit einer Klebemasse, die diese Bedingungen erfüllt eine stärkere Herabsetzung der Klebkraft erzielt als aus dem Stand der Technik bekannt.

Gemäß vorteilhafter Ausführungsformen der Erfindung enthält die Monomerzusammensetzung 5 bis 80 Gew.-%, besonders bevorzugt 21 bis 80 Gew.-%, wenigstens eines Alkylenoxid-haltigen (Meth)acrylat-Monomers mit einem Molekulargewicht von bis zu 305 g/mol, wobei es sich um (Meth)acrylate oder Di-(Meth)acrylate handeln kann.

Bevorzugt sind dabei Ethylenoxid-haltige und/oder Propylenoxid-haltige (Meth)acrylatMonomere mit einem Molekulargewicht von bis zu 305 g/mol.

Bevorzugt ist das wenigstens eine Alkylenoxid-haltige (Meth)acrylat-Monomer mit einem Molekulargewicht von bis zu 305 g/mol ausgewählt aus der Gruppe bestehend aus 2-Ethylhexyldiglycolacrylat, Ethyldiglycolacrylat, Ethylendimethacrylat, Ethylenglycoldiacrylat, Tetra(ethylenglycol)-diacrylat, Poly(ethylenglycol)diacrylaten, Di(ethylenglycol) diacrylat, Ethylenglycolmethyletheracrylat, Ethylenglycolphenyletheracrylat, Ethylenglycoldicyclopentenyletheracrylat.

Besonders bevorzugt ist das wenigstens eine Alkylenoxid-haltige (Meth)acrylat-Monomer ausgewählt aus der Gruppe bestehend aus 2-Ethylhexyldiglycolacrylat (M = 272 g/mol) und Ethyldiglycolacrylat (M = 188 g/mol).

Hiermit kann die Glasübergangstemperatur des Poly(meth)acrylats A vorteilhaft eingestellt werden, insbesondere wenn gleichzeitig eine Menge von mehr als 20 Gew.-% an NNDMA in der Monomerzusammensetzung enthalten ist. Besonders bevorzugt ist dabei 2-Ethylhexyldiglycolacrylat.

Gemäß vorteilhafter Ausführungsformen der Erfindung enthält die Monomerzusammensetzung 0,1 bis 6 Gew.-% wenigstens eines Carboxyalkyl-(Meth)Acrylates, wobei Carboxyethylacrylat besonders bevorzugt ist.

Überraschenderweise lässt sich die erfindungsgemäße Klebemasse auch mit Carboxyethylacrylat als einpolymerisiertes Monomer im Poly(meth)acrylat A nach erfolgter Verklebung elektrisch wieder ablösen.

Carboxyethylacrylat (CEA) ist insbesondere unter der CAS-Nr. 24615-84-7 und dem Handelsnamen MIRAMER CEA, von der Firma Miwon erhältlich.

Gemäß besonders vorteilhafter Ausführungsformen der Erfindung enthält die Monomerzusammensetzung 5 bis 85 Gew.-% wenigstens eines (Meth)Acrylat-Monomers ohne weitere funktionelle Gruppen, welches ausgewählt ist aus der Gruppe bestehend aus

n-Butylacrylat, n-Butylmethacrylat,
n-Pentylacrylat, n-Pentylmethacrylat, n-Hexylacrylat,
n-Hexylmethacrylat, n-Heptylacrylat, n-Octylacrylat, n-Octylmethacrylat,
n-Nonylacrylat, Isobutylacrylat, Isooctylacrylat, Isooctylmethacrylat,
2-Ethylhexylacrylat, 2-Ethylhexylmethacrylat, 2-Propylheptylacrylat und
2-Propylheptylmethacrylat.

Besonders bevorzugt ist das (Meth)Acrylat-Monomer ohne weitere funktionelle Gruppen ausgewählt aus der Gruppe bestehend aus n-Butylacrylat, n-Hexylacrylat, n-Octylacrylat, Isooctylacrylat, 2-Ethylhexylacrylat und 2-Propylheptylacrylat, wobei n-Butylacrylat und/oder 2-Ethylhexylacrylat ganz besonders bevorzugt sind.

Die Herstellung des oder der Poly(meth)acrylate A geschieht bevorzugt durch konventionelle radikalische Polymerisationen oder kontrollierte radikalische Polymerisationen. Der Einfachheit halber wird im Folgenden der Plural-Ausdruck "die Poly(meth)acrylate" verwendet. Sämtliche Ausführungen gelten selbstverständlich auch für den Fall, dass ein Poly(meth)acrylat A in der Klebemasse enthalten ist.

Die Poly(meth)acrylate können durch Copolymerisation der Monomere unter Verwendung üblicher Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Bevorzugt werden die Poly(meth)acrylate durch Copolymerisation der Monomere in Lösungsmitteln, besonders bevorzugt in Lösungsmitteln mit einem Siedebereich von 50 bis 150 °C, insbesondere von 60 bis 120 °C, unter Verwendung von 0,01 bis 5 Gew.-%, insbesondere von 0,1 bis 2 Gew.-%, jeweils bezogen auf das Gesamtgewicht der Monomeren, an Polymerisationsinitiatoren hergestellt.

Prinzipiell eignen sich alle üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat und Benzpinacol. Bevorzugte radikalische Initiatoren sind 2,2'-Azobis(2-methylbutyronitril) (Vazo® 67™ der Firma DuPont) oder 2,2'-Azobis(2-methylpropionitril) (2,2'-Azobisisobutyronitril; AIBN; Vazo® 64™ der Firma DuPont).

Bevorzugte Lösungsmittel für die Herstellung der Poly(meth)acrylate sind Alkohole wie Methanol, Ethanol, n- und iso-Propanol, n- und iso-Butanol, insbesondere Isopropanol und/oder Isobutanol; Kohlenwasserstoffe wie Toluol und insbesondere Benzine eines Siedebereichs von 60 bis 120 °C; Ketone, insbesondere Aceton, Methylethylketon, Methylisobutylketon; Ester wie Essigsäureethylester sowie Gemische der vorstehend genannten Lösungsmittel. Besonders bevorzugte Lösungsmittel sind Gemische, die Isopropanol in Mengen von 2 bis 15 Gew.-%, insbesondere von 3 bis 10 Gew.-%, jeweils bezogen auf das eingesetzte Lösungsmittelgemisch, enthalten.

Die Poly(meth)acrylate A haben vorzugsweise einen K-Wert von 20 bis 90, besonders bevorzugt von 40 bis 80, gemessen in Toluol (1%ige Lösung, 21 °C). Der K-Wert nach Fikentscher ist ein Maß für das Molekulargewicht und die Viskosität von Polymeren.

Die Poly(meth)acrylate der erfindungsgemäßen Klebemasse, insbesondere Haftklebmasse, sind bevorzugt durch Verknüpfungsreaktionen - insbesondere im Sinne von Additions- oder Substitutionsreaktionen - von in ihnen enthaltenen funktionellen Gruppen mit thermischen Vernetzern vernetzt. Es können alle thermischen Vernetzer verwendet werden, die

- sowohl eine ausreichend lange Verarbeitungszeit gewährleisten, sodass es nicht zu einer Vergelung während des Verarbeitungsprozesses, insbesondere des Extrusionsprozesses, kommt,

- als auch zu einer schnellen Nachvernetzung des Polymers auf den gewünschten Vernetzungsgrad bei niedrigeren Temperaturen als der Verarbeitungstemperatur, insbesondere bei Raumtemperatur, führen.

Möglich ist beispielsweise eine Kombination aus Carboxy-, Amino- und/oder Hydroxygruppen enthaltenden Polymeren und Isocyanaten, insbesondere aliphatischen oder blockierten Isocyanaten, beispielsweise mit Aminen deaktivierten trimerisierten Isocyanaten, als Vernetzer. Geeignete Isocyanate sind insbesondere trimerisierte Derivate von MDI [4,4-Methylendi(phenylisocyanat)], HDI [Hexamethylendiisocyanat, 1,6-Hexylendiisocyanat] und IPDI [Isophorondiisocyanat, 5-Isocyanato-1-isocyanatomethyl-1,3,3-trimethylcyclohexan], beispielsweise die Typen Desmodur® N3600 und XP2410 (jeweils BAYER AG: aliphatische Polyisocyanate, niedrigviskose HDI-Trimerisate). Ebenfalls geeignet ist die oberflächendeaktivierte Dispersion von mikronisiertem, trimerisiertem IPDI BUEJ 339®, jetzt HF9® (BAYER AG).

Auch eine Vernetzung über Komplexbildner, auch als Chelate bezeichnet, ist bevorzugt. Ein bevorzugter Komplexbildner ist beispielsweise Aluminiumacetylacetonat, welcher beispielsweise unter dem Handelsnamen Catana™ CAA 2072 der Fa. Sachen erhältlich ist.

Bevorzugt sind die Poly(meth)acrylate der erfindungsgemäßen Klebemasse, insbesondere Haftklebmasse, mittels Epoxid(en) bzw. mittels einer oder mehrerer epoxidgruppenhaltigen Substanz(en) vernetzt. Bei den epoxidgruppenhaltigen Substanzen handelt es sich insbesondere um multifunktionelle Epoxide, also solche mit zumindest zwei Epoxidgruppen; entsprechend kommt es insgesamt zu einer mittelbaren Verknüpfung der die funktionellen Gruppen tragenden Bausteine der Poly(meth)acrylate. Die epoxidgruppenhaltigen Substanzen können sowohl aromatische als auch aliphatische Verbindungen sein.

Hervorragend geeignete multifunktionelle Epoxide sind Oligomere des Epichlorhydrins, Epoxyether mehrwertiger Alkohole, insbesondere Ethylen-, Propylen-, und Butylenglycole, Polyglycole, Thiodiglycole, Glycerin, Pentaerythrit, Sorbit, Polyvinylalkohol, Polyallylalkohol und ähnliche; Epoxyether mehrwertiger Phenole, insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)ethan, 2,2-Bis-(4-hydroxyphenyl) propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl)-propan, Bis-(4-hydroxyphenyl)-phenylmethan, Bis-(4-hydroxyphenyl)-phenylmethan, Bis-(4-hydroxyphenyl)diphenylmethan, Bis (4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon sowie deren Hydroxyethylether; Phenol-Formaldehyd-Kondensationsprodukte wie Phenolalkohole und Phenolaldehydharze; S- und N-haltige Epoxide, zum Beispiel N,N-Diglycidylanilin und N,N'-Dimethyldiglycidyl-4,4-Diaminodiphenylmethan; sowie Epoxide, welche nach üblichen Verfahren aus mehrfach ungesättigten Carbonsäuren oder einfach ungesättigten Carbonsäureestern ungesättigter Alkohole hergestellt worden sind; Glycidylester; Polyglycidylester, die durch Polymerisation oder Mischpolymerisation von Glycidylestern ungesättigter Säuren gewonnen werden können oder aus anderen sauren Verbindungen, zum Beispiel aus Cyanursäure, Diglycidylsulfid oder cyclischem Trimethylentrisulfon bzw. dessen Derivaten erhältlich sind.

Sehr geeignete Ether sind beispielsweise 1,4-Butandioldiglycidether, Polyglycerol-3-glycidether, Cyclohexandimethanoldiglycidether, Glycerintriglycidether, Neopentylglykoldiglycidether, Pentaerythrittetraglycidether, 1,6-Hexandioldiglycidether, Polypropylenglykoldiglycidether, Trimethylolpropantriglycidether, Pentaerythrittetraglycidether, Bisphenol-A-diglycidether und Bisphenol-F-diglycidether.

Weitere bevorzugte Epoxide sind cycloaliphatische Epoxide, wie 3,4-Epoxycyclohexylmethyl-3,4-epoxycyclohexancarboxylat, welches kommerziell unter dem Handelsnamen Uvacure® 1500 von der Fa. Syensqo erhältlich ist.

Weitere bevorzugte Epoxide sind epoxyfunktionelle Organoalkoxysilane und dabei insbesondere cycloaliphatische Epoxysilane, die ausgewählt ist aus der Gruppe bestehend aus (3-Glycidyloxypropyl)trimethoxysilan (CAS-Nr. 2530-83-8, bspw. Dynasylan® GLYMO, Evonik), (3-Glycidyloxypropyl)triethoxysilan (CAS-Nr. 2602-34-8, bspw. Dynasylan® GLYEO, Evonik), (3-Glycidyloxypropyl)methyldimethoxysilan (CAS-Nr. 65799-47-5, bspw. Gelest Inc.), (3-Glycidyloxypropyl)methyldiethoxysilan (CAS-Nr. 2897-60-1, bspw. Gelest Inc.), 5,6-Epoxyhexyltriethoxysilan (CAS-Nr. 86138-01-4, bspw. Gelest Inc.), 2-(3,4-Epoxycyclohexyl)ethyl]trimethoxysilan (CAS-Nr. 3388-04-3, bspw. Sigma-Aldrich), 2-(3,4-Epoxycyclohexyl)ethyl]triethoxysilan (CAS-Nr. 10217-34-2, bspw. ABCR GmbH), Triethoxy[3-[(3-ethyl-3-oxetanyl)methoxy]propyl]silan (CAS-Nr. 220520-33-2, bspw. Aron Oxetane OXT-610, Toagosei Co., Ltd.). Gemäß bevorzugter Ausführungsformen wird 3-Glycidyloxypropyl)triethoxysilan eingesetzt.

Bevorzugt werden der oder die Vernetzer zu insgesamt 0,1 bis 5 Gewichtsteile, insbesondere zu 0,2 bis 1 Gewichtsteile, bezogen auf 100 Gewichtsteile Poly(meth)acrylat A, eingesetzt.

Besonders bevorzugt sind die Poly(meth)acrylate mittels eines Vernetzer-Beschleuniger-Systems ("Vernetzungssystem") vernetzt, um eine bessere Kontrolle sowohl über die Verarbeitungszeit, die Vernetzungskinetik sowie den Vernetzungsgrad zu erhalten. Das Vernetzer-Beschleuniger-System umfasst bevorzugt zumindest eine epoxidgruppenhaltige Substanz als Vernetzer und zumindest eine bei einer Temperatur unterhalb der Schmelztemperatur des zu vernetzenden Polymers für Vernetzungsreaktionen mittels epoxidgruppenhaltiger Verbindungen beschleunigend wirkende Substanz als Beschleuniger.

Bei der epoxidgruppenhaltigen Substanz als Vernetzer handelt es sich bevorzugt und insbesondere um die oben genannten epoxidgruppenhaltigen Substanzen, wobei sämtliche obige Ausführungen gelten.

Als Beschleuniger werden erfindungsgemäß besonders bevorzugt Amine eingesetzt. Diese sind formell als Substitutionsprodukte des Ammoniaks aufzufassen; in den folgenden Formeln sind die Substituenten durch "R" dargestellt und umfassen insbesondere Alkyl- und/oder Arylreste. Besonders bevorzugt werden solche Amine eingesetzt, die mit den zu vernetzenden Polymeren keine oder nur geringfügige Reaktionen eingehen.

Prinzipiell können als Beschleuniger sowohl primäre ($NRH_2$), sekundäre ($NR_2H$) als auch tertiäre Amine ($NR_3$) gewählt werden, selbstverständlich auch solche, die mehrere primäre und/oder sekundäre und/oder tertiäre Aminogruppen aufweisen. Besonders bevorzugte Beschleuniger sind tertiäre Amine wie beispielweise Triethylamin, Triethylendiamin, Benzyldimethylamin, Dimethylaminomethylphenol, 2,4,6-Tris-(N,N-dimethylaminomethyl)-phenol, N,N'-Bis(3-(dimethylamino)propyl)harnstoff. Weitere bevorzugte Beschleuniger sind multifunktionelle Amine wie Diamine, Triamine und/oder Tetramine, zum Beispiel Diethylentriamin, Triethylentetramin, Trimethylhexamethylendiamin.

Weitere bevorzugte Beschleuniger sind Organosilane, die mindestens eine Aminogruppe und mindestens eine Alkoxy- oder Acyloxygruppe enthalten. Hiermit können die Produkteigenschaften noch feiner eingestellt werden. Insbesondere und bevorzugt ist hierbei als Beschleuniger wenigstens ein entsprechendes Organosilan ausgewählt aus der Gruppe bestehend aus

N-Cyclohexyl-3-aminopropyltrimethoxysilan (CAS-Nr. 3068-78-8),
N-Cyclohexylaminomethyltriethoxysilan (CAS-Nr. 26495-91-0),
3-Aminopropyltrimethoxysilan (CAS-Nr. 13822-56-5),
3-Aminopropyltriethoxysilan (CAS-Nr. 919-30-2),
3-Aminopropylmethyldiethoxysilan (CAS-Nr. 3179-76-8),
3-(2-Aminomethylamino)propyltriethoxysilan (CAS-Nr. 5089-72-5),
3-(N,N-Dimethylaminopropyl)trimethoxysilan (CAS-Nr. 2530-86-1), und

Bis(2-hydroxyethyl)-3-aminopropyltriethoxysilan (CAS-Nr. 7538-44-5).

Besonders bevorzugt sind 3-Aminopropyltriethoxysilan (CAS-Nr. 919-30-2) und/oder 3-Aminopropylmethyldiethoxysilan (CAS-Nr. 3179-76-8).

Weitere bevorzugte Beschleuniger sind Aminoalkohole, insbesondere sekundäre und/oder tertiäre Aminoalkohole, wobei im Falle mehrerer Aminofunktionalitäten pro Molekül bevorzugt mindestens eine, besonders bevorzugt alle Aminofunktionalitäten sekundär und/oder tertiär sind. Besonders bevorzugte, derartige Beschleuniger sind Triethanolamin, N,N-Bis(2-hydroxypropyl)ethanolamin, N-Methyldiethanolamin, N-Ethyldiethanolamin, 2-Aminocyclohexanol, Bis(2-hydroxycyclohexyl)methylamin, 2-(Diisopropylamino)ethanol, 2-(Dibutylamino)ethanol, N-Butyldiethanolamin, N-Butylethanolamin, 2-[Bis(2-hydroxyethyl)amino]-2-(hydroxymethyl)-1,3-propandiol, 1-[Bis(2-hydroxyethyl)amino]-2-propanol, Triisopropanolamin, 2-(Dimethylamino)ethanol, 2-(Diethylamino)ethanol, 2-(2-Dimethylaminoethoxy)ethanol, N,N,N'-Trimethyl-N'-hydroxyethylbisaminoethylether, N,N,N'-Trimethylaminoethylethanolamin und N,N,N'-Trimethylaminopropylethanolamin.

Weitere geeignete Beschleuniger sind Pyridin, Imidazole wie beispielsweise 2-Methylimidazol und 1,8-Diazabicyclo[5.4.0]undec-7-en. Auch cycloaliphatische Polyamine können als Beschleuniger eingesetzt werden. Geeignet sind auch Beschleuniger auf Phosphorbasis wie Phosphine und/oder Phosphoniumverbindungen, beispielsweise Triphenylphosphin oder Tetraphenylphosphoniumtetraphenylborat.

Auch quartäre Ammoniumverbindungen können als Beschleuniger verwendet werden; Beispiele sind Tetrabutylammoniumhydroxid, Cetyltrimethylammoniumbromid und Benzalkoniumchlorid.

Bevorzugt werden derartige Beschleuniger zu 0,1 bis 5 Gewichtsteilen, insbesondere zu 0,2 bis 1 Gewichtsteilen, bezogen auf 100 Gewichtsteile Poly(meth)acrylat A, eingesetzt.

Zur Einstellung weiterer Eigenschaften enthält die erfindungsgemäße Klebemasse gemäß vorteilhafter Ausführungsformen weitere Additive.

Vorzugsweise beträgt deren Anteil jedoch nicht mehr als 40 Gewichtsteile bezogen auf 100 Gewichtsteile Poly(meth)acrylat A, vorzugsweise nicht mehr als 32 Gewichtsteile.

Gemäß bevorzugter Ausführungsformen handelt es sich insbesondere um Klebharze und/oder Elastomere, bevorzugt möglichst polare Klebharze und/oder polare Elastomere.

Die erfindungsgemäße Klebemasse weist gemäß bevorzugter Ausführungsformen wenigstens ein Klebharz auf.

Unter einem "Klebharz" wird entsprechend dem allgemeinem Fachmannverständnis ein oligomeres oder polymeres Harz verstanden, das die Adhäsion (die Klebkraft) der Klebemasse im Vergleich zu der kein Klebharz enthaltenden, ansonsten aber identischen Klebemasse erhöht.

Gemäß bevorzugter Ausführungsformen ist das Klebharz ein mit dem wenigstens einen Poly(meth)acrylat A verträgliches Klebharz.

Unter einem "mit dem Poly(meth)acrylat A verträglichen Klebharz" wird ein Klebharz verstanden, das die Glasübergangstemperatur des nach gründlichem Mischen von Poly(meth)acrylat A und Klebharz erhaltenen Systems im Vergleich zum reinen Poly(meth)acrylat A verändert, wobei auch der Mischung aus Poly(meth)acrylat A und Klebharz nur eine Tg zugeordnet werden kann. Ein nicht mit dem Poly(meth)acrylat A verträgliches Klebharz würde in dem nach gründlichem Mischen von Poly(meth)acrylat A und Klebharz erhaltenen System zu zwei Tg führen, von denen eine dem Poly(meth)acrylat A und die andere den Harz-Domänen zuzuordnen wäre. Die Bestimmung der Tg erfolgt in diesem Zusammenhang kalorimetrisch mittels DSC (differential scanning calorimetry).

Das mit dem Poly(meth)acrylat A verträgliche Klebharz weist bevorzugt einen DACP-Wert von weniger als 0 °C, sehr bevorzugt von höchstens - 20 °C, und/oder bevorzugt einen MMAP-Wert von weniger als 40 °C, sehr bevorzugt von höchstens 30 °C, auf.

Besonders bevorzugt ist das mit dem Poly(meth)acrylat verträgliche Klebharz ein möglichst polares Klebharz und somit bevorzugt ausgewählt ist aus der Gruppe bestehend aus (Meth)acrylatharzen und Terpenphenol-Harzen.

Insbesondere bevorzugt ist ein (Meth)acrylatharz. Durch dieses kann insbesondere die Haftung auf polaren Klebuntergründen verbessert werden. Eine erfindungsgemäße Klebemasse kann auch Mischungen mehrerer Klebharze enthalten. Ein geeignetes Harz ist unter dem Handelsnamen Paraloid™ DM-55, Fa. Dow erhältlich.

Die Gesamtmenge an Klebharzen beträgt bevorzugt von 5 bis 20 Gewichtsteile, besonders bevorzugt von 10 bis 20 Gewichtsteile, bezogen auf 100 Gewichtsteile Poly(meth)acrylat A.

In den genannten Bereichen der Gesamtmenge an Klebharzen weist die Klebemasse sehr gute Scherfestigkeiten bei gleichzeitig attraktiver Klebkraft sowie trotzdem eine elektrische Wiederablösbarkeit auf, wobei die Klebemasse hinsichtlich des Zielkonfliktes aus Klebkraft, und Scherfestigkeit sowie Wiederablösbarkeit in den Mengen- Bereichen, die sich aus der Wahl der Untergrenzen und Obergrenzen höherer Bevorzugungsstufen ergeben, entsprechend weiter optimiert ist.

Gleichzeitig ergibt sich überraschenderweise weiterhin eine gute Lagerungsstabilität, insbesondere unter feucht-warmen Bedingungen.

Die erfindungsgemäße Klebemasse weist gemäß weiterer bevorzugter Ausführungsformen kein Klebharz auf.

Die erfindungsgemäße Klebemasse weist gemäß bevorzugter Ausführungsformen wenigstens ein Elastomer, welches von dem erfindungsgemäße enthaltenen Poly(meth)acrylat A verschieden ist, auf.

Bevorzugte Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, Olefincopolymere, Polyisobutylen, Butylkautschuk, Ethylen-Propylenkautschuk, Vinylaromatenblockcopolymere, sowie chemisch funktionalisierte Kohlenwasserstoffe wie zum Beispiel halogenhaltige, acrylathaltige, allyl- oder vinyletherhaltige Polyolefine, vorzugsweise mit einem Anteil von 0,2 bis 20 Gewichtsteilen bezogen auf 100 Gewichtsteile Poly(meth)acrylat A.

Gemäß besonders bevorzugter Ausführungsformen der Erfindung enthält die Klebemasse wenigstens ein Vinylaromatenblockcopolymer.

Bei dem bzw. den Vinylaromatenblockcopolymer(en) kann es sich prinzipiell um jegliche dem Fachmann bekannten Typen handeln.

Bevorzugt haben die Vinylaromatenblockcopolymere den Aufbau A-B, A-B-A, $(A-B)_n$, $(A-B)_nX$ oder $(A-B-A)_nX$, worin

- die Blöcke A unabhängig voneinander für ein Polymer, gebildet durch Polymerisation mindestens eines Vinylaromaten;

- die Blöcke B unabhängig voneinander für ein Polymer, gebildet durch Polymerisation von konjugierten Dienen mit 4 bis 18 C-Atomen und/oder Isobutylen, oder für ein teil- oder vollhydriertes Derivat eines solchen Polymers;

- X für den Rest eines Kopplungsreagenzes oder Initiators und

- n für eine ganze Zahl $\geq$ 2 stehen.

Geeignete Kopplungsreagenzien und Initiatoren sind dem Fachmann bekannt.

Insbesondere sind alle Vinylaromatenblockcopolymere der erfindungsgemäßen Klebemasse Blockcopolymere mit einem Aufbau wie vorstehend dargelegt. Die erfindungsgemäße Klebemasse kann somit auch Gemische verschiedener Blockcopolymere mit einem Aufbau wie vorstehend enthalten.

Bevorzugte Vinylaromatenblockcopolymere umfassen also einen oder mehrere gummiartige Blöcke B (Weichblöcke) und einen oder mehrere glasartige Blöcke A (Hartblöcke). Besonders bevorzugt ist das wenigstens eine Vinylaromatenblockcopolymer der erfindungsgemäßen Klebemasse ein Blockcopolymer mit einem Aufbau A-B, A-B-A, $(A-B)_3X$ oder $(A-B)_4X$, wobei für A, B und X die vorstehenden Bedeutungen gelten. Ganz besonders bevorzugt sind alle Vinylaromatenblockcopolymere der erfindungsgemäßen Klebemasse Blockcopolymere mit einem Aufbau A-B, A-B-A, $(A-B)_3X$ oder $(A-B)_4X$, wobei für A, B und X die vorstehenden Bedeutungen gelten. Insbesondere ist das wenigstens eine Vinylaromatenblockcopolymer der erfindungsgemäßen Klebemasse ein Gemisch aus Blockcopolymeren mit einem Aufbau A-B, A-B-A, $(A-B)_3X$ oder $(A-B)_4X$, das bevorzugt mindestens Diblockcopolymere A-B und/oder Triblockcopolymere A-B-A enthält.

Die aus den A- und B-Blöcken resultierenden Blockcopolymere können gleiche oder unterschiedliche B-Blöcke enthalten.

Die Blockcopolymere weisen gemäß bevorzugter Ausführungsformen wie ausgeführt lineare A-B-A-Strukturen auf.

Gemäß weiterer Ausführungsformen sind Blockcopolymere von radialer Gestalt, also $(A-B)_3X$ oder $(A-B)_4X$, bevorzugt.

Als weitere Komponenten sind gemäß bevorzugter Ausführungsformen A-B-Zweiblockcopolymere vorhanden.

Sämtliche der vorgenannten Polymere können allein oder im Gemisch miteinander genutzt werden.

Der Block A ist insbesondere ein glasartiger Block mit einer bevorzugten Glasübergangstemperatur ($T_g$), die oberhalb der Raumtemperatur liegt. Besonders bevorzugt liegt die Tg des glasartigen Blockes bei mindestens 40 °C, insbesondere bei mindestens 60 °C, ganz besonders bevorzugt bei mindestens 80 °C und äußerst bevorzugt bei mindestens 100 °C. Der Anteil an Vinylaromatenblöcken A an der Gesamtheit der Blockcopolymere beträgt bevorzugt 10 bis 40 Gew.-%, besonders bevorzugt 10 bis 20 Gew.-%. Vinylaromaten zum Aufbau des Blocks A umfassen bevorzugt Styrol und $\alpha$-Methylstyrol. Der Block A kann somit als Homo- oder Copolymer vorliegen.

Besonders bevorzugt ist der Block A ein Polystyrol.

Bei dem wenigstens einen Vinylaromatenblockcopolymer handelt es sich bevorzugt um wenigstens ein Styrolblockcopolymer.

Der Block B ist insbesondere ein gummiartiger Block bzw. Weichblock mit einer bevorzugten Tg von kleiner als Raumtemperatur. Die Tg des Weichblocks ist besonders bevorzugt kleiner als 0 °C, insbesondere kleiner als -10 °C, beispielsweise kleiner als -40 °C und ganz besonders bevorzugt kleiner als -60 °C.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien, Dimethylbutadien und den Farnesen-Isomeren sowie beliebigen Mischungen dieser Monomere. Auch der Block B kann als Homopolymer oder als Copolymer vorliegen.

Besonders bevorzugt sind die konjugierten Diene als Monomere für den Weichblock B ausgewählt aus Butadien und Isopren. Beispielsweise ist der Weichblock B ein Polyisopren, ein Polybutadien oder ein teil- oder vollhydriertes Derivat eines dieser beiden Polymere wie insbesondere Polybutylenbutadien; oder ein Polymer aus einem Gemisch aus Butadien und Isopren. Ganz besonders bevorzugt ist der Block B ein Polyisopren.

Insbesondere mit Polyisopren als Block B ergibt sich eine hohe Scherfestigkeit der Klebemasse.

Gemäß besonders bevorzugter Ausführungsformen handelt es sich bei dem wenigstens einen Polyvinylaromat-Polydien-Blockcopolymer um ein Styrol-Butadien-Styrol-Blockcopolymer (SBS) oder um ein Styrol-Isopren-Styrol-Blockcopolymer (SIS), insbesondere um ein Styrol-Isopren-Styrol-Blockcopolymer (SIS).

Ein geeignetes Styrol-Isopren-Styrol-Blockcopolymer (SIS) ist beispielsweise unter dem Handelsnamen Quintac® 3421 von der Firma Zeon Chemicals erhältlich.

Die Gesamtmenge an Vinylaromatenblockcopolymer, insbesondere und beispielsweise Styrol-Isopren-Styrol-Blockcopolymer (SIS), beträgt bevorzugt von 5 bis 20 Gewichtsteile, besonders bevorzugt von 10 bis 20 Gewichtsteile, bezogen auf 100 Gewichtsteile Poly(meth)acrylat A.

Gemäß weiterer bevorzugter Ausführungsformen der Erfindung sind als Additive Schutzmittel enthalten. Hier seien Alterungsschutzmittel primärer und sekundärer Art, Licht- und UV-Schutzmittel sowie Flammschutzmittel genannt.

Ferner kann die Klebemasse aber auch Farbstoffe und Pigmente enthalten. Die Klebemasseschicht kann so beliebig gefärbt oder weiß, grau oder schwarz sein. Als solche oder andere weitere Additive können typischerweise genutzt werden:

- primäre Antioxidantien wie zum Beispiel sterisch gehinderte Phenole, vorzugsweise mit einem Anteil von 0,2 bis 1 Gewichtsteilen bezogen auf 100 Gewichtsteile Poly(meth)acrylat A,
- sekundäre Antioxidantien, wie zum Beispiel Phosphite oder Thioether, vorzugsweise mit einem Anteil von 0,2 bis 1 Gewichtsteilen bezogen auf 100 Gewichtsteile Poly(meth)acrylat A,
- Prozessstabilisatoren wie zum Beispiel C-Radikalfänger, vorzugsweise mit einem Anteil von 0,2 bis 1 Gewichtsteilen bezogen auf 100 Gewichtsteile Poly(meth)acrylat A,
- Lichtschutzmittel wie zum Beispiel UV-Absorber oder sterisch gehinderte Amine, vorzugsweise mit einem Anteil von 0,2 bis 1 Gewichtsteilen bezogen auf 100 Gewichtsteile Poly(meth)acrylat A,
- Verarbeitungshilfsmittel, vorzugsweise mit einem Anteil von 0,2 bis 1 Gewichtsteilen bezogen auf 100 Gewichtsteile Poly(meth)acrylat A.

Sofern die Klebemasse mit einer Schicht in Kontakt kommt, aus der potenziell sogenannte Kautschukgifte wie Kupfer-, Mangan-II, Eisen-II, Cobalt- oder Nickel-Ionen freigesetzt werden können, wird ihr vorteilhafterweise zumindest eine Sorte eine Metalldeaktivators, auch "Metal Scavenger" genannt, zugesetzt. Konkrete Beispiele hierfür sind ADK-Stab CDA-1, CDA-1H, CDA-6 und CDA-10 sowie ADK-Stab ZS-27 oder ZS-90 der Firma Adeka, Hostanox OSP1 der Firma Clariant, Naugard XL-1 der Firma SIGroup und Irganox MD-1024 der Firma BASF. Typische Einsatzmengen liegen bei bis zu 0,5 Gewichtsteilen bezogen auf 100 Gewichtsteile Poly(meth)acrylat A.

Die erfindungsgemäße Klebemasse enthält gemäß bevorzugter Ausführungsformen wenigstens einen Kompatibilisator, der beispielsweise ausgewählt ist aus der Gruppe bestehend aus Polyethern, Polyaminen, Polyvinylpyrrolidonen oder aliphatischen Polyestern, wobei der Kompatibilisator bevorzugt ein Gewichtsmittel der Molekulargewichtsverteilung Mw von 100 bis 5000 g/mol, besonders bevorzugt von 200 bis 2000 g/mol, aufweist. Desweiteren sind amphotere Stoffe wie Alkali- oder Erdalkalifettseifen, anionische, kationische oder nicht ionische Tenside vorteilhaft einsetzbar.

Gemäß besonders bevorzugter Ausführungsformen enthält die erfindungsgemäße Klebemasse wenigstens einen Polyether als Kompatibilisator, bevorzugt wenigstens eine Substanz, die ausgewählt ist aus der Gruppe bestehend aus Polyethylenglykol (PEG), Polypropylenglykol (PPG), Polytetrahydrofuran, wobei PEG und PPG besonders bevorzugt sind. Blockcopolymere aus PEG und PPG sind ebenfalls denkbar sowie Polyether, die Kohlenwasserstoffsegmente tragen.

Mit den genannten Substanzen wird überraschenderweise eine besonders gute Wiederablösbarkeit erzielt. Ohne an eine bestimmte Theorie gebunden sein zu wollen, ist es denkbar, dass durch die genannten Substanzen, insbesondere und beispielsweise PEG und/oder PPG, der Ionenfluss des oder der Elektrolyten durch die Masseschicht beschleunigt wird.

Die Gesamtmenge an Kompatibilisatoren in der Klebemasse beträgt gemäß bevorzugter Ausführungsformen in denen wenigstens ein Kompatibilisator enthalten ist, 1 bis 10 Gewichtsteile, bevorzugt 1 bis 5 Gewichtsteile, bezogen auf 100 Gewichtsteile Poly(meth)acrylat A.

Hierdurch ist die Klebemasse hinsichtlich des Zielkonfliktes aus der Verklebungsfestigkeit und der elektrischen Wiederablösbarkeit weiter optimiert.

Gemäß besonders bevorzugter Ausführungsformen der Erfindung enthält die erfindungsgemäße Klebemasse

a) 100 Gewichtsteile wenigstens eines Poly(meth)acrylats A, wobei das Poly(meth)acrylat A durch Polymerisation einer Monomerzusammensetzung hergestellt ist, die 16 bis 20 Gew.-% N,N-Dimethylacrylamid (NNDMA), 1 bis 3 Gew.-% Acrylsäure, 45 bis 55 Gew.-% n-Butylacrylat und 25 bis 35 Gew.-% 2-Ethylhexylacrylat enthält, und
b) 5 bis 12 Gewichtsteile wenigstens einer ionischen Flüssigkeit, bevorzugt 1-Butyl-3-methylimidazolium-hexafluorophosphat.

Gemäß weiterer besonders bevorzugter Ausführungsformen der Erfindung enthält die erfindungsgemäße Klebemasse

a) 100 Gewichtsteile wenigstens eines Poly(meth)acrylats A, wobei das Poly(meth)acrylat A durch Polymerisation einer Monomerzusammensetzung hergestellt ist, die 25 bis 35 Gew.-% N,N-Diethylacrylamid (NNDEA), 1 bis 3 Gew.-% Acrylsäure, 40 bis 50 Gew.-% n-Butylacrylat und 18 bis 24 Gew.-% 2-Ethylhexylacrylat enthält, und
b) 5 bis 12 Gewichtsteile wenigstens einer ionischen Flüssigkeit, bevorzugt 1-Butyl-3-methylimidazolium-hexafluorophosphat.

Gemäß weiterer besonders bevorzugter Ausführungsformen der Erfindung enthält die erfindungsgemäße Klebemasse

a) 100 Gewichtsteile wenigstens eines Poly(meth)acrylats A, wobei das Poly(meth)acrylat A durch Polymerisation einer Monomerzusammensetzung hergestellt ist, die 16 bis 20 Gew.-% N,N-Dimethylacrylamid (NNDMA), 2 bis 4 Gew.-% Carboxyethylacrylat (CEA), 45 bis 55 Gew.-% n-Butylacrylat und 25 bis 35 Gew.-% 2-Ethylhexylacrylat enthält, und
b) 5 bis 12 Gewichtsteile wenigstens einer ionischen Flüssigkeit, bevorzugt 1-Butyl-3-methylimidazolium-hexafluorophosphat.

Gemäß weiterer besonders bevorzugter Ausführungsformen der Erfindung enthält die erfindungsgemäße Klebemasse

a) 100 Gewichtsteile wenigstens eines Poly(meth)acrylats A, wobei das Poly(meth)acrylat A durch Polymerisation einer Monomerzusammensetzung hergestellt ist, die 35 bis 45 Gew.-% N,N-Diethylacrylamid (NNDEA), 18 bis 22 Gew.-% 4-Hydroxybutylacrylat (4-HBA), 20 bis 30 Gew.-% n-Butylacrylat und 10 bis 14 Gew.-% 2-Ethylhexylacrylat enthält, und
b) 5 bis 12 Gewichtsteile wenigstens einer ionischen Flüssigkeit, bevorzugt 1-Butyl-3-methylimidazolium-hexafluorophosphat, und

bevorzugt zudem 10 bis 20 Gewichtsteile wenigstens eines Polyvinylaromat-Polydien-Blockcopolymers, insbesondere wenigstens eines Styrol-Isopren-Styrol-Blockcopolymers, (SIS).

Weiterhin enthält die Klebemasse gemäß der Ausführungsformen bevorzugt 10 bis 20 Gewichtsteile wenigstens eines Klebharzes, insbesondere wenigstens eines (Meth)acrylatharzes.

Gemäß weiterer besonders bevorzugter Ausführungsformen der Erfindung enthält die erfindungsgemäße Klebemasse

a) 100 Gewichtsteile wenigstens eines Poly(meth)acrylats A, wobei das Poly(meth)acrylat A durch Polymerisation einer Monomerzusammensetzung hergestellt ist, die 16 bis 20 Gew.-% N,N-Dimethylacrylamid (NNDMA), 1 bis 3 Gew.-% Acrylsäure, 50 bis 60 Gew.-% 2-Ethylhexyldiglycolacrylat und 20 bis 30 Gew.-% 2-Ethylhexylacrylat enthält, und
b) 5 bis 12 Gewichtsteile wenigstens einer ionischen Flüssigkeit, bevorzugt 1-Butyl-3-methylimidazolium-hexafluorophosphat.

Weiterhin enthält die Klebemasse gemäß der Ausführungsformen bevorzugt 10 bis 20 Gewichtsteile wenigstens eines Klebharzes, insbesondere wenigstens eines (Meth)acrylatharzes.

Gemäß weiterer besonders bevorzugter Ausführungsformen der Erfindung enthält die erfindungsgemäße Klebemasse

a) 100 Gewichtsteile wenigstens eines Poly(meth)acrylats A, wobei das Poly(meth)acrylat A durch Polymerisation einer Monomerzusammensetzung hergestellt ist, die 30 bis 40 Gew.-% N,N-Dimethylacrylamid (NNDMA), 1 bis 3 Gew.-% Acrylsäure, 40 bis 50 Gew.-% 2-Ethylhexyldiglycolacrylat und 15 bis 25 Gew.-% 2-Ethylhexylacrylat enthält, und

b) 2,5 bis 10 Gewichtsteile wenigstens einer ionischen Flüssigkeit, bevorzugt 1-Ethyl-3-methylimidazolium-dicyanamid, und

bevorzugt zudem 10 bis 20 Gewichtsteile wenigstens eines Polyvinylaromat-Polydien-Blockcopolymers, insbesondere wenigstens eines Styrol-Isopren-Styrol-Blockcopolymers, (SIS).

Weiterhin enthält die Klebemasse gemäß der Ausführungsformen bevorzugt 10 bis 20 Gewichtsteile wenigstens eines Klebharzes, insbesondere wenigstens eines (Meth)acrylatharzes.

Gemäß weiterer besonders bevorzugter Ausführungsformen der Erfindung enthält die erfindungsgemäße Klebemasse

a) 100 Gewichtsteile wenigstens eines Poly(meth)acrylats A, wobei das Poly(meth)acrylat A durch Polymerisation einer Monomerzusammensetzung hergestellt ist, die 25 bis 30 Gew.-% N,N-Dimethylacrylamid (NNDMA), 1 bis 3 Gew.-% Acrylsäure, 45 bis 55 Gew.-% 2-Ethylhexyldiglycolacrylat und 15 bis 25 Gew.-% 2-Ethylhexylacrylat enthält, und

b) 5 bis 12 Gewichtsteile wenigstens einer ionischen Flüssigkeit, bevorzugt 1-Butyl-3-methylimidazolium-hexafluorophosphat, und

bevorzugt zudem 10 bis 20 Gewichtsteile wenigstens eines Polyvinylaromat-Polydien-Blockcopolymers, insbesondere wenigstens eines Styrol-Isopren-Styrol-Blockcopolymers, (SIS).

Weiterhin enthält die Klebemasse gemäß der Ausführungsformen bevorzugt 10 bis 20 Gewichtsteile wenigstens eines Klebharzes, insbesondere wenigstens eines (Meth)acrylatharzes.

Gemäß weiterer besonders bevorzugter Ausführungsformen der Erfindung enthält die erfindungsgemäße Klebemasse

a) 100 Gewichtsteile wenigstens eines Poly(meth)acrylats A, wobei das Poly(meth)acrylat A durch Polymerisation einer Monomerzusammensetzung hergestellt ist, die 30 bis 40 Gew.-% N,N-Dimethylacrylamid (NNDMA), 3 bis 6 Gew.-% Carboxyethylacrylat (CEA), 39 bis 45 Gew.-% 2-Ethylhexyldiglycolacrylat und 15 bis 25 Gew.-% 2-Ethylhexylacrylat enthält, und

b) 2,5 bis 5 Gewichtsteile wenigstens einer ionischen Flüssigkeit, bevorzugt 1-Ethyl-3-methylimidazolium-dicyanamid.

Gemäß weiterer besonders bevorzugter Ausführungsformen der Erfindung enthält die erfindungsgemäße Klebemasse

a) 100 Gewichtsteile wenigstens eines Poly(meth)acrylats A, wobei das Poly(meth)acrylat A durch Polymerisation einer Monomerzusammensetzung hergestellt ist, die 45 bis 53 Gew.-% N,N-Diethylacrylamid (NNDEA), 1 bis 3 Gew.-% Acrylsäure, 30 bis 40 Gew.-% 2-Ethylhexyldiglycolacrylat und 10 bis 20 Gew.-% 2-Ethylhexylacrylat enthält, und

b) 3 bis 10 Gewichtsteile wenigstens einer ionischen Flüssigkeit, bevorzugt 1-Butyl-3-methylimidazolium-hexafluorophosphat, und

bevorzugt zudem 10 bis 20 Gewichtsteile wenigstens eines Polyvinylaromat-Polydien-Blockcopolymers, insbesondere wenigstens eines Styrol-Isopren-Styrol-Blockcopolymers, (SIS).

Weiterhin enthält die Klebemasse gemäß der Ausführungsformen bevorzugt 10 bis 20 Gewichtsteile wenigstens eines Klebharzes, insbesondere wenigstens eines (Meth)acrylatharzes.

Gemäß weiterer besonders bevorzugter Ausführungsformen der Erfindung enthält die erfindungsgemäße Klebemasse

a) 100 Gewichtsteile wenigstens eines Poly(meth)acrylats A, wobei das Poly(meth)acrylat A durch Polymerisation einer Monomerzusammensetzung hergestellt ist, die 30 bis 40 Gew.-% N,N-Diethylacrylamid (NNDEA), 18 bis 22 Gew.-% 4-Hydroxybutylacrylat (4-HBA), 22 bis 32 Gew.-% 2-Ethylhexyldiglycolacrylat und 8 bis 15 Gew.-% 2-Ethylhexylacrylat enthält, und

b) 5 bis 12 Gewichtsteile wenigstens einer ionischen Flüssigkeit, bevorzugt 1-Butyl-3-methylimidazolium-hexafluorophosphat, und

bevorzugt zudem 10 bis 20 Gewichtsteile wenigstens eines Polyvinylaromat-Polydien-Blockcopolymers, insbesondere wenigstens eines Styrol-Isopren-Styrol-Blockcopolymers, (SIS).

Weiterhin enthält die Klebemasse gemäß der Ausführungsformen bevorzugt 10 bis 20 Gewichtsteile wenigstens eines Klebharzes, insbesondere wenigstens eines (Meth)acrylatharzes.

Bevorzugt ergeben bei sämtlichen Ausführungsformen die Mengen der jeweils konkret aufgeführten Monomere in den jeweiligen Monomerzusammensetzungen jeweils 100 Gew.-%.

Die erfindungsgemäße Klebemasse ist bevorzugt eine Haftklebemasse.

Unter einer Haftklebemasse wird vorliegend, wie allgemein üblich, ein Stoff verstanden, der - insbesondere bei Raumtemperatur-dauerhaft klebrig sowie klebfähig ist. Charakteristisch für eine Haftklebemasse ist, dass sie durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art der Haftklebemasse, der Temperatur und der Luftfeuchtigkeit sowie dem Substrat, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebemassen haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad der Haftklebemasse als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA, gemäß DIN EN ISO 6721) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G' ist wie folgt definiert:

G' (T/$\gamma$) • cos($\delta$) (T = Schubspannung, $\gamma$ = Deformation, $\delta$ = Phasenwinkel = Phasenverschiebung zwischen Schubspannungs- und Deformationsvektor).

Die Definition des Verlustmoduls G" lautet:

G" (T/$\gamma$) • sin($\delta$) (T = Schubspannung, $\gamma$ = Deformation, $\delta$ = Phasenwinkel = Phasenverschiebung zwischen Schubspannungs- und Deformationsvektor).

Ein Stoff gilt im Allgemeinen als haftklebrig und wird im Sinne der Erfindung als haftklebrig definiert, wenn bei Raumtemperatur, hier definitionsgemäß bei 23°C, im Deformationsfrequenzbereich von $10^0$ bis $10^1$ rad/sec G' zumindest zum Teil im Bereich von $10^3$ bis $10^7$ Pa liegt und wenn G" ebenfalls zumindest zum Teil in diesem Bereich liegt. "Zum Teil" heißt, dass zumindest ein Abschnitt der G'-Kurve innerhalb des Fensters liegt, das durch den Deformationsfrequenzbereich von einschließlich 10° bis einschließlich $10^1$ rad/sec (Abszisse) sowie den Bereich der G'-Werte von einschließlich $10^3$ bis einschließlich $10^7$ Pa (Ordinate) aufgespannt wird. Für G" gilt dies entsprechend.

Bevorzugt weist die Haftklebemasse im Deformationsfrequenzbereich von $10^1$ bis $10^1$ rad/sec bei 23 °C einen Speichermodul G' und einen Verlustmoduls G" im Bereich von $10^3$ bis $10^7$ Pa, bestimmt gemäß DIN EN ISO 6721, auf.

Zur Erzielung der viskoelastischen Eigenschaften werden die Monomere, auf denen die der Haftklebemasse zugrundeliegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765) unterhalb der Anwendungstemperatur (also üblicherweise unterhalb der Raumtemperatur (23 °C)) aufweist. Durch geeignete kohäsionssteigernde Maßnahmen, wie beispielsweise Vernetzungsreaktionen (Ausbildung brückenbildender Verknüpfungen zwischen den Makromolekülen), kann der Temperaturbereich, in dem eine Polymermasse haftklebrige Eigenschaften aufweist, vergrößert und/oder verschoben werden. Der Anwendungsbereich der Haftklebemassen kann somit durch eine Einstellung zwischen Fließfähigkeit und Kohäsion der Masse optimiert werden.

Insbesondere weist die Haftklebemasse eine Glasübergangstemperatur von $\leq$ 23 °C, bestimmt gemäß DIN 53765, auf.

Im Unterschied zu Haftklebemassen weisen Heißschmelzklebstoffe, z.B. auf der Basis von Polyamiden, Polyurethanen oder modifizierten Polyethylenen, bei Raumtemperatur (23 °C) typischerweise keine Klebrigkeit auf, wiewohl auch in Heißschmelzklebstoffzusammensetzungen.

Ein weiterer Gegenstand der vorliegenden Erfindung ist ein Klebeband umfassend wenigstens eine Klebemasseschicht D wenigstens einer erfindungsgemäßen Klebemasse.

Das erfindungsgemäße Klebeband ist bevorzugt ein doppelseitiges Klebeband. Der Einfachheit halber wird das erfindungsgemäße Klebeband im Rahmen der vorliegenden Erfindung auch in den doppelseitigen Ausführungsformen als "Klebeband" bezeichnet.

Die vorliegende Erfindung betrifft ein Klebeband, welches in beliebigen Konfektionsformen vorliegen kann, wobei Klebebandrollen bevorzugt sind. Das Klebeband, insbesondere in Bahnform, kann entweder in Form einer Rolle, also in Form einer archimedischen Spirale auf sich selbst aufgerollt, hergestellt werden oder als Klebestreifen, wie er zum Beispiel in Form von Zuschnitten oder Stanzlingen erhalten wird.

Das erfindungsgemäße Klebeband liegt insbesondere in Bahnform vor. Unter einer Bahn wird ein Objekt verstanden, dessen Länge (Erstreckung in x-Richtung) um ein Vielfaches größer ist als seine Breite (Erstreckung in y-Richtung) und die Breite entlang der gesamten Länge in etwa vorzugsweise genau gleichbleibend ausgebildet ist.

Der allgemeine Ausdruck "Klebeband", synonym auch "Klebestreifen" genannt, umfasst im Sinne dieser Erfindung alle flächigen Gebilde, wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband weist neben der Längsausdehnung (x-Richtung) und Breitenausdehnung (y-Richtung) auch eine senkrecht zu beiden Ausdehnungen verlaufende Dicke (z-Richtung) auf, wobei die Breitenausdehnung und Längsausdehnung um ein Vielfaches größer sind als die Dicke. Die Dicke ist über die gesamte durch Länge und Breite bestimmte Flächenausdehnung der Klebebänder möglichst gleich, vorzugsweise innerhalb von Toleranzen exakt gleich.

Die Ausführungen gelten analog für die Trägerschicht(en), die als Bestandteil des Klebebandes gemäß einiger bevorzugter Ausführungsformen eine Schicht in x- und y-Richtung ausbildet bzw. ausbilden.

Es versteht sich, dass die einzelnen Schichten entlang der z-Richtung aufeinander angeordnet sind.

Ein weiterer Gegenstand der vorliegenden Erfindung ist ein verklebter Verbund umfassend wenigstens folgende Schichten:

- Ein erstes Substrat A; und

- Ein zweites Substrat B; und

- Ein erfindungsgemäßes Klebeband, welches zwischen dem Substrat A und dem Substrat B angeordnet ist und die Substrate A und B miteinander verklebt.

Dabei sind insbesondere entweder das Substrat A und das Substrat B oder wenigstens eines der Substrate und das Klebeband oder keines der Substrate und das Klebeband an zwei verschiedenen Stellen elektrisch leitfähig ausgestaltet.

Ein weiterer Gegenstand der vorliegenden Erfindung ist ein Verfahren zum elektrischen Lösen des erfindungsgemäßen Verbundes, umfassend wenigstens folgende Verfahrensschritte:

i.) Anlegen einer Spannung an zwei verschiedenen Stellen des Verbundes, wobei die Spannung bevorzugt von 2 bis 50 V beträgt.

Das Anlegen der Spannung erfolgt gemäß Schritt i.) des erfindungsgemäßen Verfahrens zum elektrischen Lösen des Verbundes.

Bei der Spannung handelt es sich insbesondere um eine Gleichspannung.

Gemäß bevorzugter Ausführungsformen der Erfindung beträgt die Spannung von 3 bis 12 V. Eine derartige Spannung kann insbesondere dadurch angelegt werden, dass eine in der unmittelbaren Nachbarschaft der Verklebung befindliche Batterie verwendet wird, wie insbesondere und beispielsweise in einem Mobiltelefon, Tablet etc.

Gemäß weiterer bevorzugter Ausführungsformen der Erfindung beträgt die Spannung von 12 bis 50 V. Durch diese vergleichsweise hohe Spannung kann das Wiederablösen besonders schnell erfolgen; die Spannung muss dabei nur für wenige Sekunden angelegt werden.

Die zeitliche Dauer des Anlegens der Spannung in Schritt i.) kann, insbesondere in Abhängigkeit der gewählten Spannung, von wenigen Sekunden, insbesondere 2 Sekunden, bis zu 900 Sekunden, bevorzugt bis zu 600 Sekunden, betragen.

Natürlich ist es auch denkbar, dass die Spannung für einen längeren Zeitraum als 900 Sekunden angelegt wird, insbesondere, wenn die Spannung vergleichsweise niedrig ist.

Durch das erfindungsgemäße Verfahren zum elektrischen Lösen des erfindungsgemäßen Verbundes lassen sich die Substrate A und B auf schnelle und einfache Weise voneinander lösen, ohne dass ein allzu großer Kraftaufwand erforderlich ist.

Sofern sich die Schichten nach Anlegen der Spannung nicht ohne weitere Einwirkung voneinander lösen, umfasst das erfindungsgemäße Verfahren wenigstens den weiteren Verfahrensschritt:

ii.) Krafteinwirkung auf die Klebemasseschicht D und/oder das Substrat A und/oder das Substrat B, sodass der Abstand zwischen den Substraten A und B vergrößert wird.

Die Kraft, die gemäß Schritt ii.) eventuell noch erforderlich ist, ist deutlich geringer als die Klebkraft vor dem Anlegen der Spannung gemäß Schritt i.)

Das Anlegen der Spannung gemäß Schritt i.) erfolgt an zwei verschiedenen Stellen des erfindungsgemäßen verklebten Verbundes. An welche Stellen die Spannung zweckmäßig angelegt wird, hängt vom Aufbau des Klebebandes und des verklebten Verbundes und somit der Beschaffenheit der einzelnen Schichten und miteinander verklebten Substrate A und B ab.

Im Folgenden werden einige bevorzugte Ausführungsformen ausgeführt.

Gemäß bevorzugter Ausführungsformen ist das Klebeband ein Transferklebeband und besteht aus der Klebemasseschicht D.

Ein solches Klebeband kann in einem verklebten Verbund mit zwei Substraten A und B vorteilhafterweise dadurch elektrisch wieder gelöst werden, dass beide Substrate A und B elektrisch leitfähig sind. Hierzu wird dann eine Spannung an die Substrate A und B angelegt, sodass es in der Klebemasse zu einer Wanderung von Anionen zur Anode und von Kationen zur Kathode kommt. Ohne an eine bestimmte Theorie gebunden sein zu wollen, wird von den Erfindern folgender Mechanismus angenommen: Durch das Anlegen der Spannung erfolgt eine Wanderung des Elektrolyten, insbesondere eine Trennung der Anionen und Kationen einer ionischen Flüssigkeit, in der Klebemasseschicht D. Hierdurch wird die Adhäsion der Klebemasseschicht D an das Substrat A und das Substrat B stark herabgesetzt und es erfolgt ein Lösen dieser Schichten voneinander.

Gemäß bevorzugter Ausführungsformen der vorliegenden Erfindung umfasst der verklebte Verbund somit folgende Schichten:

- Ein erstes Substrat A, welches elektrisch leitfähig ist; und

- Ein zweites Substrat B, welches elektrisch leitfähig ist; und

- Ein erfindungsgemäßes Klebeband, welches aus der Klebemasseschicht D besteht und zwischen dem Substrat A und dem Substrat B angeordnet ist und die Substrate A und B miteinander verklebt.

Gemäß weiterer bevorzugter Ausführungsformen umfasst das Klebeband zusätzlich zur ersten Klebemasseschicht D wenigstens die folgenden Schichten:

- Eine zweite Klebemasseschicht C; und

- wenigstens eine elektrisch leitfähige Trägerschicht T, die zwischen den Schichten D und C angeordnet ist.

Ein derartiges Klebeband kann als doppelseitiges Klebeband über die zweite Klebemasseschicht C an eine Vielzahl unterschiedlicher Substrate angepasst werden. Hierbei kann es sich prinzipiell um die gleichen Substrate handeln wie gemäß der vorherigen Ausführungsformen, in denen das Klebeband ein Transferklebeband ist.

Ein derartiges Klebeband kann zudem aber insbesondere und vorteilhafterweise auch verwendet werden, um später Substrate A und B voneinander zu lösen, von denen nur eines elektrisch leitfähig ist, zum Beispiel das Substrat A.

Gemäß bevorzugter Ausführungsformen sind entweder xi.) nur die Trägerschicht T oder xii.) die Trägerschicht T und die zweite Klebemasseschicht C elektrisch leitfähig ausgestaltet.

Hierdurch kann eine Spannung an xi.) die elektrisch leitfähige Trägerschicht oder xii.) an die zweite Klebemasseschicht C sowie an das leitfähige Substrat A angelegt werden.

Das Klebeband wird zuvor vorteilhafterweise als doppelseitiges Klebeband so verklebt, dass die elektrisch lösbare Klebemasseschicht D an das leitfähige Substrat A gebunden ist und die zweite Klebemasseschicht an das Substrat B, welches leitfähig sein kann, aber nicht muss.

Ohne an eine bestimmte Theorie gebunden sein zu wollen, wird von den Erfindern folgender Mechanismus angenommen: Durch das Anlegen der Spannung erfolgt eine Wanderung des Elektrolyten, insbesondere eine Trennung der Anionen und Kationen einer ionischen Flüssigkeit, in der Klebemasseschicht D. Hierdurch wird die Adhäsion der Klebemasseschicht D an das Substrat A stark herabgesetzt und es erfolgt ein Lösen dieser Schichten voneinander.

Gemäß bevorzugter Ausführungsformen der Erfindung ist xi.) nur die Trägerschicht elektrisch leitfähig. Hieran kann besonders gut eine Spannung angelegt werden, insbesondere und bevorzugt, wenn die Trägerschicht wenigstens eine der Klebemasseschichten seitlich überragt.

Gemäß weiterer bevorzugter Ausführungsformen der Erfindung sind xii.) die Trägerschicht und die zweite Klebemasseschicht C elektrisch leitfähig. Ein derartiger Aufbau hat den Vorteil, dass die Spannung an die Klebemasseschicht C angelegt werden kann. Ein seitlicher Überstand der Trägerschicht ist nicht notwendig. Das Klebeband lässt sich daher auf einfache Weise herstellen, insbesondere da die Schichten D, T und C gemeinsam gestanzt werden können.

Bevorzugt besteht das Klebeband gemäß der vorstehend beschriebenen Ausführungsformen aus den drei Schichten D, T und C. Hierfür wird im Rahmen der vorliegenden Anmeldung auch der Begriff Dreischichtverbund D-T-C verwendet.

Gemäß bevorzugter Ausführungsformen der vorliegenden Erfindung umfasst der verklebte Verbund somit folgende Schichten:

- Ein erstes Substrat A, welches elektrisch leitfähig ist; und

- Ein zweites Substrat B; und

- Ein erfindungsgemäßes Klebeband, welches aus dem Dreischichtverbund D-T-C besteht und die Substrate A und B so miteinander verklebt, dass die Klebemasseschicht D an das leitfähige Substrat A gebunden ist.

Gemäß weiterer bevorzugter Ausführungsformen umfasst das Klebeband zusätzlich zur ersten Klebemasseschicht D wenigstens die folgenden Schichten:

- Eine zweite Klebemasseschicht C; und

- wenigstens eine erste elektrisch leitfähige Trägerschicht T, die zwischen den Schichten D und C angeordnet ist; und

- wenigstens eine zweite elektrisch leitfähige Trägerschicht T', die auf der der ersten elektrisch leitfähigen Trägerschicht T gegenüberliegenden Fläche der Klebemasseschicht D angeordnet ist; und

- Eine dritte Klebemasseschicht C', die auf der der ersten Klebemasseschicht D gegenüberliegenden Fläche der zweiten elektrisch leitfähigen Trägerschicht T' angeordnet ist.

Ein derartiges Klebeband hat wenigstens den Schichtaufbau C-T-D-T'-C' und kann als doppelseitiges Klebeband über die Klebemasseschichten C und C' an eine Vielzahl unterschiedlicher Substrate angepasst werden.

Hierbei kann es sich prinzipiell um die gleichen Substrate handeln wie gemäß der vorherigen Ausführungsformen, in denen das Klebeband ein Transferklebeband ist oder den Dreischichtaufbau D-T-C hat.

Ein derartiges Klebeband kann insbesondere und vorteilhafterweise aber auch verwendet werden, um später Substrate A und B voneinander zu lösen, von denen keines elektrisch leitfähig ist.

Gemäß bevorzugter Ausführungsformen sind entweder xi.) nur die Trägerschichten T und T' oder xii.) die Trägerschichten T und T' und die zweite Klebemasseschicht C und/oder die dritte Klebemasseschicht C' elektrisch leitfähig ausgestaltet.

Hierdurch kann eine Spannung an xi.) die beiden elektrisch leitfähigen Trägerschichten oder xii.) an wenigstens eine der Klebemasseschichten C und C' und an eine der Trägerschichten oder die andere Klebemasseschicht angelegt werden.

Analog zu obigen Ausführungsformen wird angenommen, dass durch das Anlegen der Spannung eine Wanderung des Elektrolyten, insbesondere eine Trennung der Anionen und Kationen einer ionischen Flüssigkeit, in der Klebemasseschicht D erfolgt. Hierdurch wird die Adhäsion der Klebemasseschicht D an die elektrisch leitfähigen Trägerschichten T und T' stark herabgesetzt und es erfolgt ein Lösen dieser Schichten voneinander.

Gemäß bevorzugter Ausführungsformen der Erfindung sind xi.) nur die Trägerschichten T und T' elektrisch leitfähig. Hieran kann besonders gut eine Spannung angelegt werden, insbesondere und bevorzugt, wenn die Trägerschichten T und T' wenigstens eine der jeweils benachbarten Klebemasseschichten seitlich überragen.

Gemäß weiterer bevorzugter Ausführungsformen der Erfindung sind xii.) die Trägerschichten T und T' und die zweite und die dritte Klebemasseschicht C bzw. C' elektrisch leitfähig. Ein derartiger Aufbau hat den Vorteil, dass die Spannung an die Klebemasseschichten C und C' angelegt werden kann. Ein seitlicher Überstand der Trägerschichten T und T' ist nicht notwendig. Das Klebeband lässt sich daher auf einfache Weise herstellen, insbesondere da die Schichten C, T, D, T' und C' gemeinsam gestanzt werden können.

Bevorzugt besteht das Klebeband gemäß der vorstehend beschriebenen Ausführungsformen aus den fünf Schichten C, T, D, T' und C'. Hierfür wird im Rahmen der vorliegenden Anmeldung auch der Begriff Fünfschichtverbund C-T-D-T'-C' verwendet.

Gemäß bevorzugter Ausführungsformen der vorliegenden Erfindung umfasst der verklebte Verbund somit folgende Schichten:

- Ein erstes Substrat A; und

- Ein zweites Substrat B; und

- Ein erfindungsgemäßes Klebeband, welches aus dem Fünfschichtverbund C-T-D-T'-C' besteht und die Substrate A und B miteinander verklebt.

Das elektrisch leitfähige Substrat sämtlicher Ausführungsformen kann beispielsweise ein Gehäuse aus Metall von einem Mobiltelefon sein.

Bei dem elektrisch nicht leitfähigen Substrat sämtlicher Ausführungsformen kann es sich insbesondere um ein Gehäuse aus einem nicht leitfähigen Material, wie Plastik, oder eine Batterie oder andere nicht elektrisch leitfähig ausgestaltete Bauteile handeln, wie beispielsweise Lautsprecher.

Ein weiterer Gegenstand der vorliegenden Erfindung ist die Verwendung der erfindungsgemäßen Klebemasse zur Verklebung von Bauteilen in elektronischen Geräten, Automobilen, medizinischen Geräten und zahnmedizinischen Geräten.

Ein weiterer Gegenstand der vorliegenden Erfindung ist die Verwendung des erfindungsgemäßen Klebebands zur Verklebung von Bauteilen in elektronischen Geräten, Automobilen, medizinischen Geräten und zahnmedizinischen Geräten.

Die Trägerschichten T sowie T und T' sämtlicher vorstehend genannter Ausführungsformen sind elektrisch leitfähig.

Im Folgenden werden diese Schichten weiter ausgeführt. Der Einfachheit halber wird der Begriff "elektrisch leitfähige Trägerschicht" oder auch nur "Trägerschicht" verwendet. Dieser bezieht sich je nach den obigen Ausführungsformen auf die Trägerschicht T oder die Trägerschichten T und T'.

Die Trägerschichten T und T' sind unabhängig voneinander und können gleich oder verschieden voneinander ausgeführt sein.

Bevorzugt umfasst die elektrisch leitfähige Trägerschicht wenigstens ein Metall.

Gemäß bevorzugter Ausführungsformen der Erfindung ist das Metall ausgewählt aus der Gruppe bestehend aus Kupfer, Nickel, Zink, Zinn, Silber, Gold, Aluminium, Eisen, Chrom und Legierungen dieser genannten Metalle. Ganz besonders bevorzugt ist das Metall ausgewählt aus der Gruppe bestehend aus Aluminium, Zink, Kupfer und Nickel. Sehr bevorzugt ist Aluminium.

Bevorzugt weist die elektrisch leitfähige Trägerschicht eine Schichtdicke, gemessen in z-Richtung, also parallel zur Stapelrichtung der Schichtanordnung, von 10 nm (Nanometer) bis 50 $\mu$m (Mikrometer) auf.

Die elektrisch leitfähige Trägerschicht weist gemäß bevorzugter Ausführungsformen der Erfindung a) wenigstens eine Metallfolie, bevorzugt eine Aluminiumfolie, und/oder b) wenigstens ein elektrisch leitfähiges Textil aufweisend wenigstens ein Metall, bevorzugt ausgewählt aus der Gruppe bestehend aus Kupfer und Nickel, und/oder c) eine oder mehrere Lagen wenigstens eines aufgedampften Metalls, bevorzugt ausgewählt aus der Gruppe bestehend aus Kupfer und Aluminium, und/oder d) wenigstens ein Gitter aus Metall und/oder e) eine mit Metall bedampfte Folie auf.

Es ist dabei prinzipiell auch denkbar, dass die Schicht T eine Kombination von zwei oder mehreren der genannten Möglichkeiten aufweist.

Metallfolien, wie beispielsweise und bevorzugt Aluminiumfolien, sind dem Fachmann bekannt.

Bevorzugt weist die Metallfolie, beispielsweise und bevorzugt die Aluminiumfolie, eine Schichtdicke, gemessen in z-Richtung, also parallel zur Stapelrichtung der Schichtanordnung, von 5 bis 50 $\mu$m, besonders bevorzugt von 10 bis 30 $\mu$m auf.

Elektrisch leitfähige Textilien sind dem Fachmann bekannt, insbesondere unter dem englischen Ausdruck "conductive mesh". Hierbei handelt es sich um ein textiles Gewebe, zum Beispiel aus PET (Polyethylenterephthalat), welches mit einem Metall, zum Beispiel mit Kupfer und/oder Nickel, beschichtet ist, wodurch die elektrische Leitfähigkeit des Gewebes hergestellt ist.

Dem Fachmann ist ebenfalls bekannt, dass Metalle direkt als Monolage oder Mehrfachlage auf Flächen, wie hier die Oberfläche einer Klebemasseschicht aufgedampft werden können. Im Rahmen der vorliegenden Erfindung kann die elektrisch leitfähige Trägerschicht durch Aufdampfen von Metall auf die Klebemasseschicht D oder die Klebemasseschicht C oder die Klebemasseschicht C' bereitgestellt werden.

Ferner sind dem Fachmann Gitter aus Metall unterschiedlicher Dimensionen bekannt. Metallgitter mit geeigneten Schichtdicken können beispielsweise durch ein Gelege aus entsprechend dünnen Metallfäden oder durch Stanzen wenigstens einer Folie entsprechender Schichtdicke hergestellt sein.

Bei einer mit Metall bedampften Folie wird insbesondere eine nicht leitfähige Folie mit Metall bedampft, um diese elektrisch leitfähig auszubilden. Das Material der Folie kann prinzipiell ausgewählt sein aus sämtlichen Materialien, die dazu geeignet sind mit Metall bedampft zu werden und als Trägerfolie in Klebebändern verwendet zu werden. Das Material ist insbesondere ausgewählt aus Polyestern und Polyolefinen, wobei auch eine Mischung mehrerer Materialien denkbar ist. Als Polyester sind insbesondere Polyethylenterephthalat (PET) und Polyethylennaphthalat (PEN) bevorzugt. Als Polyolefine sind insbesondere Polypropylen (PP), Polyethylen (PE) bevorzugt. Gemäß bevorzugter Ausführungsformen ist das Material der Folie ausgewählt aus der Gruppe bestehend aus PET, PEN, PE, PP. Bevorzugt handelt es sich um eine Folie aus PET (Polyethylenterephthalat). Eine derartige Folie ist dimensionsstabil und somit gut verarbeitbar, ohne sich signifikant zu dehnen oder zu zerreißen. Hierdurch ist es möglich eine homogene und lückenlose Metallschicht dauerhaft aufzubringen, sodass die elektrische Leitfähigkeit, insbesondere in z-Richtung, über die gesamte Folie dauerhaft gewährleistet ist.

In den Ausführungsformen, in denen wenigstens eine elektrisch leitfähige Trägerschicht T oder wenigstens zwei elektrisch leitfähige Trägerschichten T und T' vorhanden sind, ist es bevorzugt, dass diese wenigstens eine benachbarte Klebemasseschicht in wenigstens einer Erstreckungsrichtung der Schichtebene seitlich überragen und somit einen seitlichen Überstand aufweisen. An diesen seitlichen Überstand kann dann auf einfache Weise eine Spannung angelegt werden.

Im Fall des Fünfschichtverbundes sind die seitlichen Überstände der elektrisch leitfähigen Trägerschichten T und T' gemäß vorteilhafter Ausführungsformen räumlich getrennt voneinander angeordnet. Dies erleichtert es eine Spannung an diese beiden Überstände anzulegen.

Im Fall von aufgedampftem Metall als Trägerschicht ist es bevorzugt, dass diese Trägerschicht nur eine benachbarte Klebemasseschicht in wenigstens einer Erstreckungsrichtung der Schichtebene seitlich überragt und die jeweils andere Klebemasseschicht als mechanische Stütze dieser Metallschicht dient. Hierbei hat die Metallschicht keine eigentliche Trägerfunktion. Stattdessen fungiert die andere Klebemasseschicht als Träger für die Metallschicht. Der Einfachheit halber wird der Begriff Trägerschicht für die Metallschicht aber auch in diesen Ausführungsformen beibehalten. Bevorzugt beträgt die Schichtdicke der Schicht T in diesem Fall größer oder gleich 10 nm (Nanometer), bevorzugt 50 bis 200 nm.

Gemäß bevorzugter Ausführungsformen der Erfindung weist die elektrisch leitfähige Trägerschicht T bzw. T und/oder T' a) wenigstens eine Metallfolie, bevorzugt eine Aluminiumfolie, und/oder b) wenigstens ein elektrisch leitfähiges Textil aufweisend wenigstens ein Metall, bevorzugt ausgewählt aus der Gruppe bestehend aus Kupfer und Nickel, und/oder d) wenigstens ein Gitter aus Metall und/oder e) eine mit Metall bedampfte Folie auf, und überragt die erste Klebemasseschicht D und die zweite Klebemasseschicht C oder die erste Klebemasseschicht D und die zweite Klebemasseschicht C und/oder die erste Klebemasseschicht D und die dritte Klebemasseschicht C' in wenigstens einer Erstreckungsrichtung.

Hierdurch kann auf einfache und sichere Weise eine Spannung an die Trägerschicht angelegt werden. Gleichzeitig kann das Klebeband auf vergleichsweise einfache Weise hergestellt werden.

Gemäß bevorzugter Ausführungsformen der Erfindung weist die elektrisch leitfähige Trägerschicht T bzw. T und/oder T' eine oder mehrere Lagen, bevorzugt eine Lage, wenigstens eines aufgedampften Metalls, bevorzugt ausgewählt aus der Gruppe bestehend aus Kupfer und Aluminium, auf.

Gemäß besonders bevorzugter Ausführungsformen der Erfindung weist die elektrisch leitfähige Trägerschicht T bzw. T und/oder T' e) eine mit Metall bedampfte Folie auf, und überragt die erste Klebemasseschicht D in wenigstens einer Erstreckungsrichtung. Hierbei ist die Folie insbesondere auf einer Oberfläche mit Metall bedampft und die jeweilige Trägerschicht über die metallisierte Fläche an die erste Klebemasseschicht D, und damit an die elektrisch ablösbare Schicht, gebunden.

Hierdurch kann auf einfache und sichere Weise eine Spannung an die Trägerschicht angelegt werden.

Unter dem Ausdruck "seitlich überragen" ist im Rahmen der vorliegenden Erfindung jegliche Art von seitlichem Überstand der angesprochenen Schicht oder Schichten gemeint und bedeutet, dass sich die jeweils angesprochene Schicht insbesondere in der "xy"-Ebene und somit seitlich - senkrecht zur Stapelrichtung - weiter erstreckt als die Bezugsschicht. Anstelle des Begriffes "seitlicher Überstand" werden im Rahmen der vorliegenden Erfindung auch die Begriffe "seitliche Verlängerung" oder "seitlicher Verlängerungsabschnitt" verwendet.

Der Begriff "seitlich" ist hier auf jede Erstreckungsrichtung der Schichtebene "xy" senkrecht zur Stapelrichtung der Schichten "z" bezogen. Der Begriff ist damit insbesondere unabhängig von der geometrischen Form des Klebebandes in der "xy"-Ebene, welche zum Beispiel ein Rechteck, wie für Klebebänder üblich (s. oben), aber auch ein Quadrat oder ein Kreis sein kann.

Geringfügige Schwankungen der Maße der einzelnen Schichten in der "xy"-Ebene, die sich aufgrund des Stanzverfahrens oder ähnlichen formgebenden Verfahren ergeben, sind hiermit nicht angesprochen, insbesondere da solche geringfügigen Materialüberstände aufgrund der Dimensionen nicht dazu geeignet sind, planmäßig eine Spannung daran anzulegen.

Die Klebemasseschichten C bzw. C und C' können prinzipiell auf den gleichen Massen basieren wie die Klebemasseschicht D, wobei die Klebemassen der Schichten C bzw. C und C' keine Elektrolyten enthalten müssen, aber können. Bevorzugt enthalten die Schichten C bzw. C und C' keine Elektrolyten.

Gemäß einiger oben beschriebener Ausführungsformen des Dreischichtverbundes D-T-C ist die Klebemasseschicht C elektrisch leitfähig.

Gleichermaßen kann auch die Klebemasseschicht C und/oder die Klebemasseschicht C' des Fünfschichtverbundes C-T-D-T'-C' elektrisch leitfähig ausgestaltet sein.

Im Folgenden werden diese Schichten weiter ausgeführt. Der Einfachheit halber wird an geeigneten Stellen der Begriff "elektrisch leitfähige Klebemasseschicht" verwendet. Dieser bezieht sich je nach den obigen Ausführungsformen auf die Klebemasseschicht C oder die Klebemasseschichten C und/oder C'. Ferner wird der Einfachheit halber der Ausdruck "die Klebemasseschichten C bzw. C und/oder C'" verwendet, womit die jeweiligen Schichten in den beschriebenen Ausführungsformen des Klebebandes umfassend wenigstens den Dreischichtverbund oder wenigstens den Fünfschichtverbund gemeint sind.

Die Klebemasseschichten C und C' sind unabhängig voneinander und können gleich oder verschieden voneinander sein.

Bevorzugt enthält die elektrisch leitfähige Klebemasseschicht hierzu wenigstens ein Metall, wie insbesondere Nickel, Kupfer, Silber, bevorzugt in Form von elektrisch leitfähigen Metallpartikeln und/oder metallisierten Partikeln, besonders bevorzugt Metallpartikeln. Metallisierte Partikel sind insbesondere und bevorzugt Glas- oder Polymerpartikel, die mit wenigstens einem Metall metallisiert sind, sodass die zuvor elektrisch nicht leitfähigen Partikel durch die Metallisierung elektrisch leitfähig ausgestaltet sind.

Besonders bevorzugt enthält die elektrisch leitfähige Klebemasseschicht elektrisch leitfähige Partikel, die ausgewählt sind aus der Gruppe bestehend aus Nickelpartikeln, Kupferpartikeln und versilberten Kupferpartikeln.

Gemäß besonders bevorzugter Ausführungsformen enthält die elektrisch leitfähige Klebemasseschicht Nickelpartikel.

Bevorzugt enthält die elektrisch leitfähige Klebemasseschicht 5 bis 40 Gewichtsteile, besonders bevorzugt 20 bis 40 Gewichtsteile, ganz besonders bevorzugt 25 bis 35 Gewichtsteile, an elektrisch leitfähigen Partikeln, insbesondere Metallpartikeln und/oder metallisierten Partikeln, bezogen auf 100 Gewichtsteile an enthaltenen Polymeren.

Die elektrisch leitfähigen Partikel sollten bevorzugt nicht oder nicht deutlich größer sein als die jeweilige Dicke der elektrisch leitfähigen Klebemasseschicht in z-Richtung, gemessen mit dem Lichtmikroskop.

Bevorzugt weisen die elektrisch leitfähigen Partikel eine durchschnittliche Partikelgröße von 1 bis 10 $\mu$m, besonders bevorzugt von 1 bis 6 $\mu$m, wiederum bevorzugt von 3 bis 5 $\mu$m, wie insbesondere 4 $\mu$m, auf.

Die elektrisch leitfähige Klebemasseschicht ist insbesondere wenigstens in z-Richtung elektrisch leitfähig.

Sie kann aber auch in der xy-Ebene elektrisch leitfähig sein. Wenn die elektrisch leitfähige Klebemasseschicht lediglich in z-Richtung, nicht aber notwendigerweise in xy-Richtung elektrisch leitfähig ausgestaltet ist, ist gemäß bevorzugter Ausführungsformen, in denen ein Metall, insbesondere Metallpartikel, zugegeben werden, um die elektrische Leitfähigkeit zu erzielen, eine geringere Menge dieser Materialien notwendig. Hierdurch ist die Klebemasse hinsichtlich erforderlicher Leitfähigkeit, Klebkraft, Fließverhalten und der Kosten optimiert.

Eine Schicht gilt im Rahmen der vorliegenden Erfindung insbesondere dann als "elektrisch leitfähig", wenn der Widerstand kleiner als 1 Ohm ist, gemessen in der jeweiligen Richtung, hier insbesondere in z-Richtung, nach dem Standard MIL-DTL-83528C.

Unabhängig davon, ob die Klebemasseschichten C bzw. C und/oder C' elektrisch leitfähig ausgestaltet sind gelten folgende Ausführungen.

Die Klebemasse der Klebemasseschichten C bzw. C und/oder C' ist gemäß bevorzugter Ausführungsformen keine Haftklebemasse.

Gemäß besonders bevorzugter Ausführungsformen der Erfindung ist die Klebemasse der Klebemasseschichten C bzw. C und C' eine Haftklebemasse und die Klebemasseschicht C bzw. C und C' damit eine Haftklebemasseschicht.

Die Klebemasseschichten C bzw. C und/oder C' sind gemäß bevorzugter Ausführungsformen der Erfindung wie die Klebemasseschicht D Klebemassen enthaltend wenigstens ein Poly(meth)acrylat A.

Gemäß bevorzugter Ausführungsformen der Erfindung wird in den Klebemasseschichten C bzw. C und/oder C' das gleiche Poly(meth)acrylat A sowie ggf. das gleiche Klebharz und ggf. das gleiche Vinylaromatenblockcopolymer verwendet, wie in der Klebemasseschicht D. Hierdurch können insbesondere ähnliche Substrate, hier als A und B bezeichnet, miteinander verklebt sein.

Gemäß weiterer bevorzugter Ausführungsformen der Erfindung wird in den Klebemasseschichten C bzw. C und/oder C' eine von der Klebemasse der Klebemasseschicht D verschiedene Klebemasse verwendet.

Hierdurch können die Eigenschaften der leitfähigen Schicht besonders gut an das oder die Substrate angepasst werden, welches über die Klebemasseschicht C bzw. C und/oder C' verklebt ist. Dadurch, dass die Klebemasseschicht C bzw. C und/oder C' bevorzugt keinen Elektrolyten, wie eine ionische Flüssigkeit enthält bzw. enthalten muss, müssen die Bestandteile hierauf nicht abgestimmt werden.

Gemäß bevorzugter Ausführungsformen der Erfindung wird in den Klebemasseschichten C bzw. C und/oder C' eine von der Klebemasse der Klebemasseschicht D verschiedene Klebemasse verwendet, wobei die Klebemasse der Klebemasseschichten C bzw. C und/oder C' hitzeaktivierbar sein kann oder eine andere Haftklebemasse auf Acrylat-Basis sein kann.

Die Klebemasse der Klebemasseschicht D und je nach Ausführungsform weitere Klebemassen werden mittels bekannter Verfahren hergestellt und in Schichtform gebracht, insbesondere durch Ausstreichen. Dies kann unter Verwendung eines oder mehrerer geeigneter Lösemittel erfolgen oder auch lösemittelfrei.

Ferner können ggf. einer oder mehrere Trocknungsschritte erfolgen.

Gemäß bevorzugter Ausführungsformen wird das Poly(meth)acrylat in Lösemitteln wie beschrieben polymerisiert und anschließend weitere Substanzen, wie der Elektrolyt, Vernetzer und ggf. Klebharz und weitere Additive, wie SIS, zugegeben, und ggf. mittels Lösemitteln auf einen gewünschten Feststoffgehalt eingestellt.

Die Masse wird anschließend auf übliche Weise, insbesondere auf einen Liner oder eine Trägerschicht, beschichtet und getrocknet.

Die Herstellung erfindungsgemäßer Klebemassen findet gemäß weiterer bevorzugter Ausführungsformen lösemittelfrei durch Extrusion statt, was ein weiterer Vorteil der vorliegenden Erfindung ist. Auf diese Weise lässt sich bereits bei der Herstellung erfindungsgemäßer Klebemassen und Klebemasseschichten der Grad an Nachhaltigkeit zusätzlich zu der späteren Möglichkeit des Wiederablösens durch Vermeidung von Lösungsmitteleinsatz weiter steigern.

Das Laminieren mehrerer Schichten aufeinander erfolgt auf dem Fachmann bekannte Weise, wobei die Schichten so aufeinandergelegt werden, dass insbesondere ein Schichtverbund DTC, wobei T zwischen D und C angeordnet ist, oder C'-T'-D-T-C als doppelseitiges Klebeband erhalten wird.

Das Bereitstellen der Trägerschichten T bzw. T' kann wie oben bereits ausgeführt auf verschiedene Weise erfolgen.

So ist es denkbar, dass a) eine Metallfolie, insbesondere eine Aluminiumfolie, und/oder b) ein elektrisch leitfähiges Netz und/oder d) wenigstens ein Gitter aus Metall und/oder e) eine mit Metall bedampfte PET-Folie zwischen den jeweiligen Klebemasseschichten platziert wird.

Ferner können c) Metallpartikel direkt auf die Oberfläche der Klebemasseschicht D oder C oder C' aufgedampft werden.

Das erfindungsgemäße Klebeband stellt insbesondere ein doppelseitiges Klebeband dar, bei dem je nach Ausführungsform zwei Flächen der Klebemasseschicht D (Transferklebeband) oder eine Fläche der ersten Klebemasseschicht D und eine Fläche der zweiten Klebemasseschicht C (Dreischichtverbund D-T-C) oder jeweils eine Fläche der Klebemasseschichten C und C' (Fünfschichtverbund C-T-D-T'-C') jeweils zum Verkleben von Substraten verfügbar sind.

Vorteilhaft können die äußeren, frei liegenden Flächen der Klebemasseschichten des erfindungsgemäßen Klebebandes mit antiadhäsiven Materialien ausgerüstet sein wie mit einem Trennpapier oder einer Trennfolie, auch Liner genannt. Bei einem Liner kann es sich auch um mindestens einseitig, vorzugsweise beidseitig, antiadhäsiv beschichtetes Material handeln, wie beispielsweise beidseitig silikonisiertes Material. Ein Liner, bzw. allgemeiner formuliert, ein temporärer Träger, ist nicht Bestandteil eines Klebebands, sondern nur ein Hilfsmittel zu dessen Herstellung, Lagerung und/oder für die Weiterverarbeitung durch Stanzen. Darüber hinaus ist ein Liner im Gegensatz zu einem permanenten Träger nicht fest mit einer Klebstoffschicht verbunden, sondern fungiert vielmehr als temporärer Träger, d.h. als Träger, der von der Klebstoffschicht abziehbar ist. "Permanente Träger" werden in der vorliegenden Anmeldung synonym auch einfach "Träger" genannt.

Die Dicke der einzelnen Klebemasseschicht(en) (in z-Richtung) beträgt bevorzugt von 15 bis 2000 $\mu$m, besonders bevorzugt von 20 bis 500 $\mu$m, ganz besonders bevorzugt von 25 bis 200 $\mu$m. Jedoch ist eine so geringe Dicke wie möglich bevorzugt, so z. B. von unterhalb 100 $\mu$m.

In den Ausführungsformen des Dreischichtverbundes D-T-C sowie des Fünfschichtverbundes C-T-D-T'-C' weisen die Klebemasseschichten D und C bzw. D und C sowie D und C' gemäß bevorzugter Ausführungsformen unterschiedliche Schichtdicken auf, wobei die Dicke der Klebemasseschicht D beispielsweise geringer ist als die der Klebemasseschichten C bzw. C und C'.

Gemäß weiterer bevorzugter Ausführungsformen weisen die Schichten D und C bzw. D, C und C' die gleiche Schichtdicke auf.

Wenn die Schichtdicke der Schicht D zu hoch ist, wird diese aufgrund der enthaltenen Elektrolyten ggf. unwirtschaftlich teuer.

Um, falls gewünscht, die Verankerung der Klebemasseschicht oder der Klebemasseschichten auf einer Trägerschicht zu erhöhen, kann die Trägerschicht chemisch und/oder physikalisch, insbesondere physikalisch vorbehandelt sein. Corona-, Plasma- oder Flammvorbehandlung sind denkbar. Die Oberflächenbehandlung mittels Corona auch für metallisierte Folien ist dem Fachmann bekannt und beispielsweise in der EP 0355622 A2 beschrieben.

Nachfolgend werden bevorzugte Ausführungsformen der Erfindung unter Bezugnahme auf die beiliegenden Figuren näher erläutert und beschrieben. Dabei zeigen:

Fig. 1 eine vereinfachte schematische Querschnittsdarstellung durch ein erfindungsgemäßes doppelseitiges Klebeband in einer bevorzugten Ausführungsform; und

Fig. 2 eine vereinfachte schematische Querschnittsdarstellung durch ein erfindungsgemäßes doppelseitiges Klebeband in einer bevorzugten Ausführungsform; und

Fig. 3 eine vereinfachte schematische Querschnittsdarstellung durch ein erfindungsgemäßes doppelseitiges Klebeband in einer bevorzugten Ausführungsform; und

Fig. 4 eine vereinfachte schematische Querschnittsdarstellung durch einen erfindungsgemäßen verklebten Verbund einer bevorzugten Ausführungsform; und

Fig. 5 eine vereinfachte schematische Querschnittsdarstellung durch einen erfindungsgemäßen verklebten Verbund, an den eine Spannung angelegt ist, in einer bevorzugten Ausführungsform; und

Fig. 6 eine vereinfachte schematische Querschnittsdarstellung durch einen erfindungsgemäßen verklebten Verbund, nachdem eine Spannung angelegt wurde und hierdurch eine adhäsive Spaltung erfolgt ist; und

Fig. 7 eine vereinfachte schematische Querschnittsdarstellung durch einen erfindungsgemäßen verklebten Verbund einer bevorzugten Ausführungsform; und

Fig. 8 eine vereinfachte schematische Querschnittsdarstellung durch einen erfindungsgemäßen verklebten Verbund einer bevorzugten Ausführungsform.

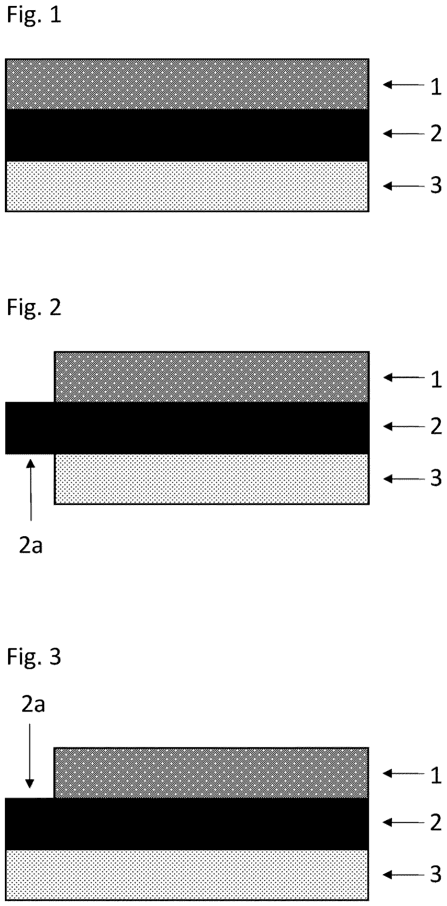

Wie in Fig. 1 erkennbar ist die Klebemasseschicht D 1 über eine ihrer Flächen mit der Trägerschicht T 2 verbunden. Auf der der Schicht D gegenüberliegenden Fläche der Trägerschicht T ist die zweite Klebemasseschicht C 3 angeordnet.

Wie in Fig. 1 ebenfalls erkennbar stellt der Schichtverbund ein doppelseitiges Klebeband dar, bei dem eine Fläche der Klebemasseschicht D und eine Fläche der zweiten Klebemasseschicht C jeweils zum Verkleben verfügbar sind.

In Fig. 2 ist eine bevorzugte Ausführungsform der Erfindung dargestellt. Hierbei überragt die elektrisch leitfähige Trägerschicht T 2 die Klebemasseschicht D 1 und die zweite Klebemasseschicht C 3 in wenigstens einer Erstreckungsrichtung der Schichtebene seitlich, sodass die elektrisch leitfähige Trägerschicht T 2 einen Überstand mit wenigstens einer freien Fläche 2 a aufweist.

In Fig. 3 ist eine weitere bevorzugte Ausführungsform der Erfindung dargestellt. Hierbei überragt die elektrisch leitfähige Trägerschicht T 2 die Klebemasseschicht D 1 in wenigstens einer Erstreckungsrichtung der Schichtebene seitlich, sodass die elektrisch leitfähige Trägerschicht T 2 einen Überstand mit einer freien Fläche 2 a aufweist. In Fig 3 ist die Klebemasseschicht C 3 so ausgebildet, dass sie ebenfalls einen Überstand relativ zur Schicht D 1 aufweist. Bei der Trägerschicht T 2 handelt es sich insbesondere um eine einseitig mit Aluminium beschichtete PET-Folie, wobei die aluminisierte Seite an die Schicht D 1 gebunden ist.

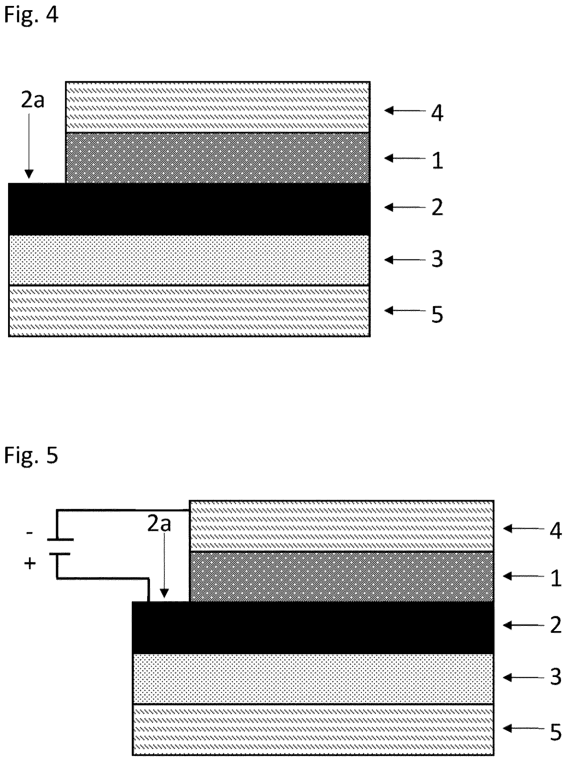

In Fig. 4 ist eine schematische Darstellung des erfindungsgemäßen verklebten Verbundes in einer bevorzugten Ausführungsform abgebildet. Wie anhand von Fig. 4 erkennbar, ist das Klebeband über die Klebemasseschicht D 1 auf einer Fläche des ersten Substrates A 4 angeordnet, wobei das erste Substrat elektrisch leitfähig ist.

Ferner ist das Klebeband über die zweite Klebemasseschicht C 3 auf einer Fläche eines zweiten Substrates B 5 angeordnet.

In Fig. 4 ist ebenfalls beispielhaft dargestellt, dass die elektrisch leitfähige Trägerschicht T 2 die Klebemasseschicht D 1 in wenigstens einer Erstreckungsrichtung der Schichtebene seitlich überragt, sodass die elektrisch leitfähige Trägerschicht T einen Überstand mit einer freien Fläche 2 a aufweist.

Über diese freie Fläche 2a kann nun eine Spannung angelegt werden, wie in der schematischen Darstellung gemäß Fig. 5 gezeigt.

Durch das Anlegen der Spannung erfolgt eine Wanderung des Elektrolyten, insbesondere eine Trennung der Anionen und Kationen einer ionischen Flüssigkeit, in der Klebemasseschicht D 1.

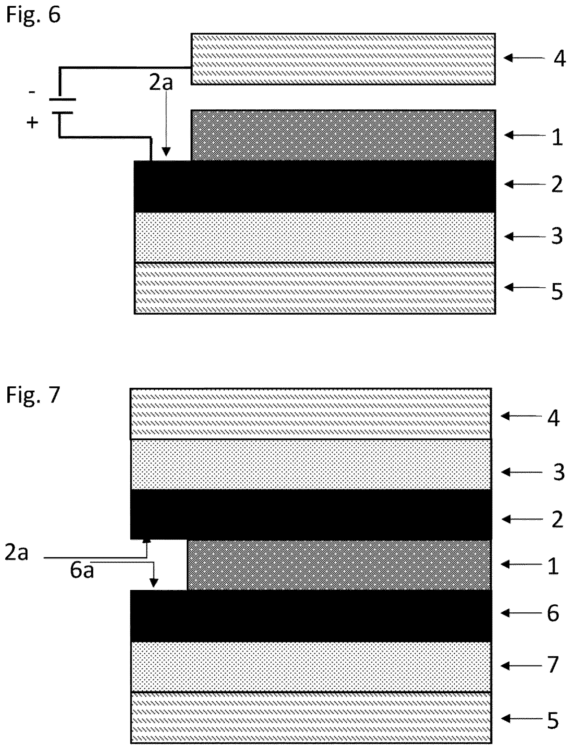

Hierdurch wird die Adhäsion der Klebemasseschicht D 1 an das Substrat A 4 stark herabgesetzt und es erfolgt ein Lösen dieser Schichten voneinander, wie an der schematischen Darstellung gemäß Fig. 6 erkennbar.

In Fig. 7 ist eine weitere schematische Darstellung des erfindungsgemäßen verklebten Verbundes in einer bevorzugten Ausführungsform abgebildet. Wie anhand von Fig. 7 erkennbar, ist das Klebeband über die Klebemasseschicht C 3 auf einer Fläche des ersten Substrates A 4 angeordnet.

Ferner ist das Klebeband über die dritte Klebemasseschicht C' 7 auf einer Fläche eines zweiten Substrates B 5 angeordnet.

Zwischen den Schichten C 3 und C' 7 befinden sich die elektrisch ablösbare Klebemasseschicht D 1 sowie zwei elektrisch leitfähige Trägerschichten T 2 und T' 6, wobei die Schicht D 1 zwischen den Trägerschichten angeordnet ist.

In Fig. 7 ist ebenfalls beispielhaft dargestellt, dass die elektrisch leitfähige Trägerschicht T 2 sowie die elektrisch leitfähige Trägerschicht T' 6 die Klebemasseschicht D 1 jeweils in wenigstens einer Erstreckungsrichtung der Schichtebene seitlich überragen, sodass die elektrisch leitfähige Trägerschicht T einen Überstand mit einer freien Fläche 2a und die elektrisch leitfähige Trägerschicht T' einen Überstand mit einer freien Fläche 6a aufweist.

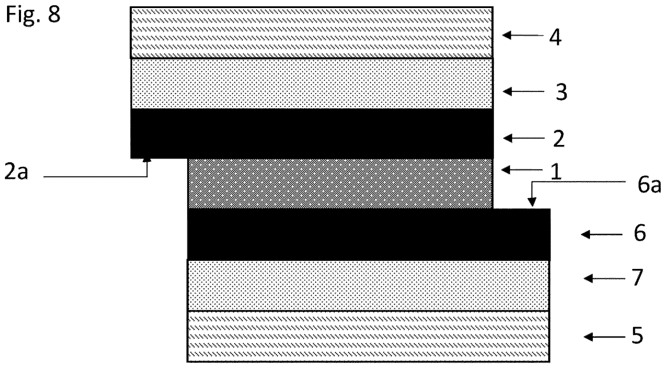

In Fig. 8 ist eine weitere schematische Darstellung des erfindungsgemäßen verklebten Verbundes in einer bevorzugten Ausführungsform abgebildet, welche der Darstellung gemäß Fig. 7 ähnlich ist. Im Unterschied zu Fig. 7 zeigen die Überstände der elektrisch leitfähigen Trägerschicht T 2 und der elektrisch leitfähigen Trägerschicht T' 6 jedoch in unterschiedliche Richtungen, sodass die resultierenden freien Flächen dieser Schichten 2a bzw. 6a räumlich getrennt sind.

Über diese freien Flächen 2a und 6a kann nun eine Spannung angelegt werden, analog zu Figur 5. Im Unterschied zur Ausführungsform gemäß Figur 5 kann die Spannung an die Flächen 2a und 6a angelegt werden, sodass keines der Substrate A und B elektrisch leitfähig sein muss.

Durch das Anlegen der Spannung erfolgt eine Wanderung des Elektrolyten, insbesondere eine Trennung der Anionen und Kationen einer ionischen Flüssigkeit, in der Klebemasseschicht D 1. Hierdurch wird die Adhäsion der Klebemasseschicht D 1 an die Trägerschichten T 2 und/oder T' 6 stark herabgesetzt und es erfolgt ein Lösen dieser Schichten voneinander. Insbesondere erfolgt ein Ablösen an die Schicht, an welche der Minuspol angelegt wird.

Das Anlegen der Spannung ist im Fall der räumlich getrennten Flächen 2a und 6a gemäß Fig. 8 vereinfacht.

Die Darstellungen in den Fig. 1 bis 8 sind wie ausgeführt schematische Darstellungen. Insbesondere können die Schichtdicken der einzelnen Schichten D, T und C voneinander abweichen. Ferner sind auch die Substrate A und B lediglich schematisch als weitere Schichten dargestellt. Diese können selbstverständlich jegliche andere räumliche Geometrie aufweisen.

Im Folgenden werden einige Beispiele beschrieben, um die Erfindung weiter zu verdeutlichen. Die mit "E" gekennzeichneten Beispiele stellen erfindungsgemäße Beispiele für Klebemassen dar, während die mit "V" gekennzeichneten Beispiele Vergleichsbeispiele sind.

In den Tabellen 1 und 3 sind die Bestandteile der Monomerzusammensetzungen des jeweiligen Poly(meth)acrylats A sowie der Klebemassen angegeben, deren elektrische Ablösbarkeit untersucht werden soll. Die Zahlenangaben stellen Gewichtsteile dar, wobei 100 Gewichtsteile des jeweiligen Poly(meth)acrylats A (mit der jeweils darüberstehenden Monomerzusammensetzung) verwendet werden und die Mengen an weiteren Bestandteilen, also an Vernetzer und Elektrolyt sowie ggf. Klebharz und SIS zusätzlich hinzukommen.

<u>Verwendete Substanzen und Abkürzungen in den Tabellen 1 bis 3</u>

NNDMA: N,N-Dimethylacrylamid
NNDEA: N,N-Diethylacrylamid
ACMO: 4-Acryloylmorpholin
AA: Acrylsäure
CEA: Carboxyethylacrylat, CAS-Nr. 24615-84-7 MIRAMER CEA, FA. Miwon.
4-HBA: 4-Hydroxybutylacrylat
n-BA: n-Butylacrylat
2-EHA: 2-Ethylhexylacrylat
2-EHDA: 2-Ethylhexyldiglycolacrylat
EDGA: Ethyldiglycolacrylat
Al-Chelat: Vernetzer: Aluminiumacetylacetonat, Catana™ CAA 2072, Fa. Sachen
N75: Vernetzer: Desmodur® N 75 BA, FA. Covestro
BMIM-PF$_6$: ionische Flüssigkeit 1-Butyl-3-methylimidazolium-hexafluorophosphat
EMIM-N(CN)$_2$: ionische Flüssigkeit 1-Ethyl-3-methylimidazolium-dicyanamid, BASIONICS™ VS03, Fa. BASF
Klebharz: Paraloid™ DM-55, Fa. Dow
SIS: Styrol-Isopren-Styrol-Blockcopolymer, Quintac® 3421, Fa. Zeon Chemicals.

Die Poly(meth)acrylate wurden gemäß der jeweiligen Monomerzusammensetzung ansonsten auf dem Fachmann bekannte Weise hergestellt.

Beispielhaft ist im Folgenden die Herstellung der Polymethacrylate anhand des Polymethacrylats aus Beispiel E1 beschrieben:

Ein für radikalische Polymerisationen konventioneller 4 L - Reaktor wurde mit 204 g n-Butylacrylat, 72 g N,N-Dimethylacrylamid, 116 g 2-Ethylhexylacrylat, 8 g Acrylsäure und 400 g Ethylacetat/Isopropanol (96:4) befüllt. Nach 45-minütiger Durchleitung von Stickstoffgas unter Rühren wurden der Reaktor auf 58 °C hochgeheizt und 0,2 g Vazo® 67 (2,2'-Azo-bis(2-methylbutyronitril) hinzugegeben und die Dosierung des Lösungsmittels und Monomergemischs gestartet. Die Dosierung erfolgt über zwei Stunden und setzt sich wie folgt zusammen: 306 g n-Butylacrylat, 108 g N,N-Dimethylacrylamid, 174 g 2-Ethylhexylacrylat, 12 g Acrylsäure und 600 g Ethylacetat/Isopropanol (96:4). Anschließend wurde die Manteltemperatur auf 65 °C erwärmt und die Reaktion konstant bei dieser Außentemperatur durchgeführt. Nach 45 min wird die Temperatur für 2 h auf 72 °C erhöht. Bevor es nach 2 h für die restliche Reaktionszeit von 6,25 h auf 70 °C verringert wird. Zusätzlich zur Initiierung zum Beginn der Reaktion wird nach 30 min 0,3 g, nach 45 min 0,4 g und nach 60 min 0,4 g Vazo® 67 zugegeben. Zur Reduktion der Restmonomere wurden nach 5,5 h 0,15 g Perkadox® 16 (Di(4-tert-butylcyclohexyl)peroxydicarbonat) und nach 7 h nochmals 0,1 g hinzugegeben. Die Reaktion wurde nach 9 h Reaktionszeit abgebrochen und auf Raumtemperatur abgekühlt. Die Lösung wurde auf einen Feststoffgehalt von 38 Gew.-% eingestellt.

Die Klebemassen der Tabellen 1 bis 3 wurden auf folgende Weise hergestellt:

Zu 100 Gewichtsteilen bezogen auf die Menge des jeweiligen Poly(meth)acrylats ohne Lösemittel wurden die jeweilige ionische Flüssigkeit und der angegebene Vernetzer sowie ggf. Klebharz und/oder SIS zugegeben.

Die erhaltene Mischung wurde dann mit einem Streichbalken auf einen PET-Liner, ausgerüstet mit einem trennenden Silikon, ausgestrichen, so dass nach Trocknen bei 105 °C für 20 min. eine Schichtdicke von 75 μm entsteht.

Mit diesen auf die elektrische Ablösbarkeit zu untersuchenden Klebemassen wurden erfindungsgemäße Beispiele und Vergleichsbeispiele für Klebebänder hergestellt, wobei in sämtlichen Beispielen zwei der 75 μm dicken Klebebänder aufeinander laminiert wurden, sodass eine Schichtdicke der Klebemasse von 150 μm resultierte.

Diese 150 μm dicken Klebebänder wurden auf eine mit Zinn beschichtete 23 μm dicke PET-Folie laminiert.

Die Zinn-Beschichtung der PET-Folie war dabei in Kontakt mit der jeweiligen auf die elektrische Ablösbarkeit zu untersuchende Klebemasse.

Die Klebebänder wurden anhand der Klebkraft auf Stahl hinsichtlich ihrer elektrischen Ablösbarkeit getestet, wobei die Klebkraft vor dem Anlegen einer Spannung getestet wurde und bei weiteren Prüfkörpern zunächst eine Spannung von 12 V für 60 Sekunden angelegt wurde und erst dann die Klebkraft bestimmt wurde.

Die Spannung wurde dabei zwischen Stahlsubstrat und Sn-bedampfter PET Folie angelegt, wobei der Minuspol an das Stahlsubstrat und der Pluspol an die Zinnfolie angelegt wurde.

Weitere Angaben zu den Prüfmethoden befinden sich im unten aufgeführten Teil "Prüfmethoden".

Die Ergebnisse sind ebenfalls in den Tabellen 1 bis 3 zusammengefasst.

Alle erfindungsgemäßen Beispiele zeigen einen signifikanten Klebkraftabfall bei Anlegen einer Spannung von 12 V für 60 s. Die Stahlplatte war jeweils rückstandslos im Hinblick auf Klebemassereste.

Ferner zeigen alle erfindungsgemäßen Beispiele eine gute Korrosionsbeständigkeit.

Tabelle 1

| Bestandteile | E1 | E2 | E3 | E4 | E5 | E6 | E7 | E8 |
|---|---|---|---|---|---|---|---|---|
| **Monomere** | | | | | | | | |
| NNDMA | 18 | 18 | 18 | 18 | 28 | 35 | 35 | 35 |
| AA | 2 | 2 | - | 2 | 2 | 2 | 2 | - |
| CEA | - | - | 3 | - | - | - | - | 5 |
| n-BA | 51 | 51 | 51 | - | - | - | - | - |
| 2-EHDA | - | - | - | 56 | 49 | 44 | 44 | 42 |
| 2-EHA | 29 | 29 | 28 | 24 | 21 | 19 | 19 | 18 |
| **Poly(meth)acrylat A** | 100 | 100 | 100 | 100 | 100 | 100 | 100 | 100 |
| Al-Chelat | 0,4 | 0,4 | 0,4 | 0,4 | 0,4 | 0,4 | 0,4 | 0,4 |
| BMIM-PF$_6$ | 8 | 10 | 7 | 7,5 | 10 | - | - | - |
| EMIM-N(CN)$_2$ | - | - | - | - | - | 3 | 6 | 3 |
| Klebharz | - | - | - | 15 | 15 | - | 15 | - |

(fortgesetzt)

| Bestandteile | E1 | E2 | E3 | E4 | E5 | E6 | E7 | E8 |
|---|---|---|---|---|---|---|---|---|
| **Monomere** | | | | | | | | |
| SIS | - | - | - | - | 15 | - | 15 | - |
| | | | | | | | | |
| Klebkraft [N/cm] | 6,9 | 6,2 | 9,7 | 8,9 | 13,7 | 6,4 | 8,7 | 8,5 |
| Klebkraft (12 V, 60 s) [N/cm] | 0,0 | 0,0 | 0,0 | 0,0 | 0,2 | 0,0 | 0,0 | 0,1 |
| Klebkraft 60 °C, 95 % r.F. [N/cm] | 8,6 | 8,0 | 12,1 | 5,5 | 9,8 | 9,0 | 7,4 | 8,4 |
| Klebkraft 60 °C, 95 % r.F., (12 V, 60 s) [N/cm] | 0,0 | 0,0 | 0,4 | 0,0 | 0,2 | 0,0 | 0,0 | 0,0 |

Tabelle 2

| Bestandteile | E9 | E10 | E11 | E12 | E13 | E14 | E15 |
|---|---|---|---|---|---|---|---|
| **Monomere** | | | | | | | |
| NNDEA | 30 | 48 | 48 | 48 | 40 | 40 | 40 |
| AA | 2 | 2 | 2 | 2 | - | - | - |
| 4-HBA | - | - | - | - | 22 | 22 | 22 |
| n-BA | 46 | - | - | - | - | 26 | 26 |
| 2-EHDA | - | 35 | 35 | 35 | 38 | - | - |
| 2-EHA | 22 | 15 | 15 | 15 | - | 12 | 12 |
| **Poly(meth)acrylat A** | 100 | 100 | 100 | 100 | 100 | 100 | 100 |
| Al-Chelat | 0,4 | 0,4 | 0,4 | 0,4 | - | - | - |
| N75 | - | - | - | - | 0,3 | 0,3 | 0,3 |
| BMIM-PF$_6$ | 7 | 5 | 7 | 8 | 10 | 8 | 10 |
| Klebharz | - | - | - | - | 15 | - | 15 |
| SIS | - | - | - | 15 | 15 | 15 | 15 |
| | | | | | | | |
| Klebkraft [N/cm] | 7,0 | 7,8 | 8,7 | 9,2 | 10,0 | 7,1 | 5,2 |
| Klebkraft (12 V, 60 s) [N/cm] | 0,2 | 0,3 | 0,3 | 0,6 | 0,2 | 0,1 | 0,2 |
| Klebkraft 60 °C, 95 % r.F. [N/cm] | 13,2 | 8,3 | 8,8 | 11,4 | 13,0 | 7,5 | 6,5 |
| Klebkraft 60 °C, 95 % r.F., (12 V, 60 s) [N/cm] | 0,0 | 0,2 | 0,4 | 0,1 | 0,0 | 0,0 | 0,0 |

Tabelle 3

| Bestandteile | V1 | V2 | V3 | V4 |
|---|---|---|---|---|
| **Monomere** | | | | |
| NNDMA | 12 | 6 | 15 | - |
| ACMO | - | - | - | 13 |
| AA | 2 | 2 | 5 | 2 |
| n-BA | 55 | 59 | - | 55 |
| EDGA | - | - | 80 | - |
| 2-EHA | 31 | 33 | - | 30 |
| **Poly(meth)acrylat A** | 100 | 100 | 100 | 100 |
| Al-Chelat | 0,4 | 0,4 | 0,4 | 0,4 |

(fortgesetzt)

| Bestandteile | V1 | V2 | V3 | V4 |
|---|---|---|---|---|
| **Monomere** | | | | |
| BMIM-PF6 | 5 | 5 | - | 7 |
| EMIM-N(CN)$_2$ | - | - | 3 | - |
| | | | | |
| Klebkraft [N/cm] | 9,0 | 10,8 | 3,3 | 3,7 |
| Klebkraft (12 V, 60 s) [N/cm] | 8,0 | 10,6 | 3,0 | 4,7 |
| Klebkraft 60 °C, 95 % r.F. [N/cm] | 13,6 | 12,7 | 1,8 | 12 |
| Klebkraft 60 °C, 95 % r.F., (12 V, 60 s) [N/cm] | 7,3 | 14 | 1,7 | 2,2 |

*Prüfmethoden*

Alle Messungen werden, sofern nichts anderes angegeben ist, bei 23 °C und 50 % relativer Luftfeuchtigkeit durchgeführt. Die mechanischen und klebtechnischen Daten wurden wie folgt ermittelt:

*Molmasse (GPC)*

Die Angaben der zahlenmittleren Molmasse $M_n$ und der gewichtsmittleren Molmasse $M_w$ in dieser Schrift beziehen sich auf die an sich bekannte Bestimmung per Gelpermeationschromatographie (GPC). Die Bestimmung erfolgt an 100 $\mu$l klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C.

Als Vorsäule wird eine Säule Typ PSS-SDV, 5 $\mu$m, $10^3$ Å, 8,0 mm * 50 mm (Angaben hier und im Folgenden in der Reihenfolge: Typ, Partikelgröße, Porosität, Innendurchmesser * Länge; 1 Å = $10^{-10}$ m) verwendet. Zur Auftrennung wird eine Kombination der Säulen des Typs PSS-SDV, 5 $\mu$m, $10^3$ Å sowie $10^5$ Å und $10^6$ Å mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung wird mittels des kommerziell verfügbaren ReadyCal®-Kit Poly(styrene) high der Firma PSS Polymer Standard Service GmbH, Mainz, durchgeführt. Die erhaltenen Werte werden anhand der Mark-Houwink-Parameter K und alpha universell in Polymethylmethacrylat (PMMA) umgerechnet, so dass die Angabe der Daten in PMMA-Massenäquivalenten erfolgt.

*K-Wert*

Das Prinzip der Methode beruht auf der kapillarviskosimetrischen Bestimmung der relativen Lösungsviskosität. Hierzu wird die Testsubstanz in Toluol durch dreißigminütiges Schütteln aufgelöst, so dass man eine 1 %-ige Lösung erhält. In einem Vogel-Ossag-Viskosimeter wird bei 25 °C die Auslaufzeit gemessen und daraus in Bezug auf die Viskosität des reinen Lösungsmittels die relative Viskosität der Probenlösung bestimmt. Aus Tabellen kann nach Fikentscher auf dem Fachmann bekannte Weise der K-Wert abgelesen werden (K = 1000 k).

*DSC*

Die Glasübergangspunkte - synonym als Glasübergangstemperaturen bezeichnet - insbesondere von Polymeren bzw. Polymerblöcken werden angegeben als Ergebnis von Messungen mittels Dynamischer Differenzkalorimetrie DDK (englisch Dynamic Scanning Calorimetry; DSC). Dazu werden ca. 5 mg einer unbehandelten Polymerprobe in ein Aluminiumtiegelchen (Volumen 25 $\mu$l) eingewogen und mit einem gelochten Deckel verschlossen. Zur Messung wird ein DSC 204 F1 der Firma Netzsch verwendet. Es wird zwecks Inertisierung unter Stickstoff gearbeitet. Die Probe wird zunächst auf -150 °C abgekühlt, dann mit einer Heizrate von 10 K/min bis +150 °C aufgeheizt und erneut auf -150 °C abgekühlt. Die sich anschließende zweite Heizkurve wird erneut bei 10 K/min gefahren und die Änderung der Wärmekapazität aufgenommen. Glasübergänge werden als Stufen im Thermogramm erkannt.

*(Klebharz)Erweichungstemperatur*

Für Einzelsubstanzen: Die (Kleb)Harzerweichungstemperatur (Erweichungspunkt; Erw.-Punkt) wird nach der einschlägigen Methodik durchgeführt, die als Ring & Ball bekannt ist und nach ASTM E28 standardisiert ist.

### DACP

In ein trockenes Probenglas werden 5,0 g Testsubstanz (das zu untersuchende Klebharzmuster) eingewogen und mit 5,0 g Xylol (Isomerengemisch, CAS [1330-20-7], $\geq$ 98,5 %, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99 %, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Firma Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

### MMAP

In ein trockenes Probenglas werden 5,0 g Testsubstanz (das zu untersuchende Klebharzmuster) eingewogen und mit 10 mL trockenem Anilin (CAS [62-53-3], $\geq$ 99,5 %, Sigma-Aldrich #51788 oder vergleichbar) und 5 mL trockenem Methylcyclohexan (CAS [108-87-2], $\geq$ 99 %, Sigma-Aldrich #300306 oder vergleichbar) versetzt. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Firma Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der MMAP-Wert desto höher ist die Aromatizität der Testsubstanz.

### Klebkraft Stahl

Zum Testen der Klebkraft der auf die elektrische Ablösbarkeit zu untersuchenden Schicht auf Stahl: Ein 20 mm breiter Streifen des Klebebands umfassend die auf die elektrische Ablösbarkeit zu untersuchende Klebemasse und die 23 $\mu$m dicke mit Zinn beschichtete PET-Folie wurde auf eine Stahlplatte aufgebracht, die zuvor zweimal mit Aceton und einmal mit Isopropanol gewaschen wurde. Der Klebestreifen wird zweimal mit einem Anpressdruck entsprechend einem Gewicht von 2 kg auf das Substrat aufgedrückt. Das Klebeband wird nach einer Aufziehzeit von 72 h bei 23 °C und 50 % r.F. (relative Luftfeuchtigkeit) bzw. bei 60 °C und 95 % r.F. mit einer Geschwindigkeit von 300 mm/min und in einem Winkel von 180° vom Substrat abgezogen. Alle Messungen werden bei Raumtemperatur durchgeführt.

Die Messergebnisse sind in N/cm angegeben und sind gemittelt aus drei Messungen.

Für die Messung der Klebkraft nach Anlegen einer Spannung wird das Klebeband wie oben beschrieben auf die Stahlplatte geklebt. Es wird eine Gleichspannung von 12 V angelegt, und zwar so, dass der Minuspol an die Stahlplatte gelegt wird und der Pluspol an die mit Zinn beschichtete Folie gelegt wird.

Nach 60 s wird die Spannung abgeschaltet und die Probe sofort in die Messapparatur gespannt und die Klebkraft gemessen.

### Korrosionsverhalten

Bei der Bewertung des Korrosionsverhalten werden zwei Aspekte betrachtet. Zum einen wird das entsprechende Muster für 72h bei 60°C und 95%rH als Streifen von 2cm Breite eingelagert und anschließend optisch betrachtet. Eine Korrosion der Aluminiumschicht ist anschließend sofort bewertbar. Kommt es zu Korrosion ist entweder eine Art "Lochfraß" zu erkennen oder das Aluminium ist quasi nicht mehr vorhanden und das Muster durchsichtig. Zum anderen wird ein Streifen wie in der Klebkraftmethode beschrieben verklebt und ebenfalls bei Feucht-Wärme eingelagert. Nach 72h wird das verklebte Muster aus dem Ofen geholt, für 2h rekonditioniert und eine Spannung angelegt (s. 180°C Klebkrafttest). Der Klebkraftverlust muss deutlich messbar sein. Ist das Aluminium stark korrodiert leitet es den Strom nicht und die Klebkraft wird nicht reduziert.

### Dicke

Die Dicke einer Klebemasseschicht kann durch Bestimmung der Dicke eines bezüglich seiner Länge und seiner Breite definierten Abschnitts einer solchen auf einen Liner aufgetragenen Klebemassenschicht bestimmt werden, abzüglich der (bekannten oder separat ermittelbaren) Dicke eines Abschnitts gleicher Dimensionen des verwendeten Liners. Die Dicke der Klebemasseschicht lässt sich über handelsübliche Dickenmessgeräte (Taster-Prüfgeräte) mit Genauigkeiten von weniger als 1 $\mu$m Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

Wie bereits die Dicke einer Klebemasseschicht lässt sich auch die Dicke eines Klebebands (Klebestreifens) bzw. eines Trägers analog über handelsübliche Dickenmessgeräte (Taster-Prüfgeräte) mit Genauigkeiten von weniger als 1 μm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

Bezugszeichenliste

1 Klebemasseschicht D
2 elektrisch leitfähige Trägerschicht T
2a freie Fläche der elektrisch leitfähigen Trägerschicht T
3 zweite Klebemasseschicht C
4 erstes Substrat A
5 zweites Substrat B
6 zweite elektrisch leitfähige Trägerschicht T'
6a freie Fläche der elektrisch leitfähigen Trägerschicht T'
7 dritte Klebemasseschicht C'

**Patentansprüche**

**1.** Klebemasse enthaltend

a) wenigstens ein Poly(meth)acrylat A, wobei das Poly(meth)acrylat A durch Polymerisation einer Monomerzusammensetzung hergestellt ist, die mehr als 15 Gew.-% eines oder mehrerer stickstoffhaltigen Monomere enthält, wobei die Monomerzusammensetzung optional eines oder mehrere Alkylenoxid-haltige (Meth)acrylat-Monomere enthält, unter der Bedingung, dass in diesem Fall keines der Alkylenoxid-haltigen (Meth)acrylat-Monomere ein Molekulargewicht von mehr als 305 g/mol aufweist; und
b) wenigstens ein Elektrolyt, wobei der Elektrolyt ausgewählt ist aus der Gruppe bestehend aus ionischen Flüssigkeiten und Metallsalzen, wobei ionische Flüssigkeiten besonders bevorzugt sind.

**2.** Klebemasse nach Anspruch 1, **dadurch gekennzeichnet, dass** das Anion der ionischen Flüssigkeit ausgewählt ist aus der Gruppe bestehend aus $Br^-$, $AlCl_4^-$, $Al_2Cl_7^-$, $NO_3^-$, $BF_4^-$, $PF_6^-$, $CH_3COO^-$, $CF_3COO^-$, $CF_3CO_3^-$, $CF_3SO_3^-$, $(CF_3SO_2)_2N^-$, $(CF_3SO_2)_3C^-$, $AsF_6^-$, $SbF_6^-$, $CF_3(CF_2)_3SO_3^-$, $(CF_3CF_2SO_2)_2N^-$, $CF_3CF_2CF_2COO^-$, $N(CN)_2^-$ und $(FSO_2)_2N^-$, und dabei besonders bevorzugt ausgewählt ist aus $(CF_3SO_2)_2N^-$, $N(CN)_2^-$, $(FSO_2)_2N^-$, $PF_6^-$ und Tetrafluorborat $(BF_4^-)$, und/oder das Kation der ionischen Flüssigkeit ausgewählt ist aus der Gruppe bestehend aus Kationen auf Imidazolium-Basis, Kationen auf Pyridinium-Basis, Kationen auf Pyrrolidin-Basis und Kationen auf Ammonium-Basis, und dabei besonders bevorzugt ausgewählt ist aus der Gruppe bestehend aus Kationen auf Imidazolium-Basis, wobei das Kation besonders bevorzugt ausgewählt ist aus der Gruppe bestehend aus 1-Ethyl-3-methylimidazolium und 1-Butyl-3-methylimidazolium.

**3.** Klebemasse nach einem der vorherigen Ansprüche, **dadurch gekennzeichnet, dass** der Elektrolyt ausgewählt ist aus der Gruppe bestehend aus den ionischen Flüssigkeiten 1-Ethyl-3-methylimidazolium-dicyanamid und 1-Butyl-3-methylimidazolium-hexafluorophosphat.

**4.** Klebemasse nach einem der vorhergehenden Ansprüche, **dadurch gekennzeichnet, dass** sie 2,5 bis 15 Gewichtsteile, bevorzugt 2,5 bis 11 Gewichtsteile, an Elektrolyten, bevorzugt ionischen Flüssigkeiten, bezogen auf 100 Gewichtsteile Poly(meth)acrylat A enthält.

**5.** Klebemasse nach einem der vorhergehenden Ansprüche, **dadurch gekennzeichnet, dass** das stickstoffhaltige Monomer oder wenigstens eines der stickstoffhaltigen Monomere der Monomerzusammensetzung ausgewählt ist aus der Gruppe bestehend aus stickstoffhaltigen (Meth)Acrylat-Monomeren, Vinylpyridin, 4-Vinylpyridin, N-Vinylphthalimid, N-Vinyllactam, N-Vinylpyrrolidon und N-Vinylformamid, wobei stickstoffhaltige (Meth)Acrylat-Monomere bevorzugt sind, wobei das stickstoffhaltige (Meth)Acrylat-Monomer oder wenigstens eines der stickstoffhaltigen (Meth)Acrylat-Monomere ausgewählt ist aus der Gruppe bestehend aus (Meth)Acrylamiden, substituierten (Meth)Acrylamiden, Amino-(Meth)acrylaten, substituierten Amino-(Meth)acrylaten, (Meth)Acrylnitril, Cyanoalkyl(meth)acrylaten, 4-(Meth)Acryloylmorpholin, wobei Acrylamide besonders bevorzugt sind.

**6.** Klebemasse nach einem der vorhergehenden Ansprüche, **dadurch gekennzeichnet, dass** die Monomerzusammensetzung mehr als 15 Gew.-% wenigstens eines Acrylamids als stickstoffhaltiges (Meth)Acrylat-Monomer enthält, wobei das Acrylamid bevorzugt ausgewählt ist aus der Gruppe bestehend aus Dimethyl-aminopropylacrylamid, Dimethylaminopropylmethacrylamid, N-(1-Methylundecyl)acrylamid, N-(n-Butoxymethyl)acrylamid, N-(Butoxymethyl)methacrylamid, N-(Ethoxymethyl)acrylamid, N-(n-Octadecyl)acrylamid, N,N-Dialkyl-substituierten Amiden wie beispielsweise N,N-Dimethylacrylamid, N,N-Dimethylmethacrylamid, N,N-Diethylacrylamid und N,N-Diethylmethacrylamid, N-Benzylacrylamid,
N-Isopropylacrylamid, N-tert-Butylacrylamid, N-tert-Octylacrylamid, N-Methylolacrylamid, N-Methylolmethacrylamid, und besonders bevorzugt ausgewählt ist aus der Gruppe bestehend aus N,N-Dimethylacrylamid und N,N-Diethylacrylamid.

**7.** Klebemasse nach einem der vorhergehenden Ansprüche, **dadurch gekennzeichnet, dass** die Monomerzusammensetzung 0 Gew.-% (Meth)Acrylsäure oder bis zu 4 Gew.-%, insbesondere 0,1 bis 4 Gew.-%, (Meth)Acrylsäure enthält.

**8.** Klebemasse nach einem der vorhergehenden Ansprüche, **dadurch gekennzeichnet, dass** die Monomerzusammensetzung 5 bis 35 Gew.-% wenigstens eines hydroxygruppenhaltigen (Meth)Acrylat-Monomers enthält, wobei das hydroxygruppenhaltige (Meth)Acrylat-Monomer bevorzugt ausgewählt ist aus der Gruppe bestehend aus 4-Hydroxybutylacrylat, 2-Hydroxyethylacrylat, 2-Hydroxypropylacrylat, 2-Hydroxybutylacrylat, 2-Hydroxyethylmethacrylat, 2-Hydroxypropylmethacrylat, 2-Hydroxybutylmethacrylat, 2-Hydroxyisopropylacrylat, 2-Hydroxyethylacrylamid, besonders bevorzugt ausgewählt ist aus der Gruppe bestehend aus 4-Hydroxybutylacrylat, 2-Hydroxyisopropylacrylat und 2-Hydroxyethylacrylat, wobei das hydroxygruppenhaltige (Meth)Acrylat-Monomer ganz besonders bevorzugt 4-Hydroxybutylacrylat ist.

**9.** Klebemasse nach einem der vorhergehenden Ansprüche, **dadurch gekennzeichnet, dass** die Monomerzusammensetzung 5 bis 80 Gew.-%, besonders bevorzugt 21 bis 80 Gew.-%, wenigstens eines Alkylenoxid-haltigen (Meth)acrylat-Monomers mit einem Molekulargewicht von bis zu 305 g/mol enthält, welches bevorzugt ausgewählt ist aus der Gruppe bestehend aus 2-Ethylhexyldiglycolacrylat, Ethyldiglycolacrylat, Ethylendimethacrylat, Ethylenglycoldiacrylat, Tetra(ethylenglycol)-diacrylat, Poly(ethylenglycol)diacrylaten, Di(ethylenglycol)diacrylat, Ethylenglycolmethyletheracrylat, Ethylenglycolphenyletheracrylat, Ethylenglycoldicyclopentenyletheracrylat, und besonders bevorzugt ausgewählt ist aus der Gruppe bestehend aus 2-Ethylhexyldiglycolacrylat und Ethyldiglycolacrylat.

**10.** Klebemasse nach einem der vorhergehenden Ansprüche, **dadurch gekennzeichnet, dass** die Monomerzusammensetzung 0,1 bis 6 Gew.-% wenigstens eines Carboxyalkyl-(Meth)Acrylates enthält, wobei Carboxyethylacrylat besonders bevorzugt ist.

**11.** Klebemasse nach einem der vorhergehenden Ansprüche, **dadurch gekennzeichnet, dass** die Monomerzusammensetzung 5 bis 85 Gew.-% wenigstens eines (Meth)Acrylat-Monomers ohne weitere funktionelle Gruppen enthält, welches ausgewählt ist aus der Gruppe bestehend aus n-Butylacrylat, n-Butylmethacrylat, n-Pentylacrylat, n-Pentylmethacrylat, n-Hexylacrylat, n-Hexylmethacrylat, n-Heptylacrylat, n-Octylacrylat, n-Octylmethacrylat, n-Nonylacrylat, Isobutylacrylat, Isooctylacrylat, Isooctylmethacrylat, 2-Ethylhexylacrylat, 2-Ethylhexylmethacrylat, 2-Propylheptylacrylat und 2-Propylheptylmethacrylat, wobei das (Meth)Acrylat-Monomer ohne weitere funktionelle Gruppen besonders bevorzugt ausgewählt ist aus der Gruppe bestehend aus n-Butylacrylat, n-Hexylacrylat, n-Octylacrylat, Isooctylacrylat, 2-Ethylhexylacrylat und 2-Propylheptylacrylat, wobei n-Butylacrylat und/oder 2-Ethylhexylacrylat ganz besonders bevorzugt sind.

**12.** Klebeband umfassend wenigstens eine Klebemasseschicht D einer Klebemasse nach einem der Ansprüche 1 bis 11.

**13.** Klebeband nach Anspruch 12, **dadurch gekennzeichnet, dass** das Klebeband ein Transferklebband ist und aus der Klebemasseschicht D besteht.

**14.** Klebeband nach Anspruch 12, **dadurch gekennzeichnet, dass** es zusätzlich wenigstens die folgenden Schichten umfasst:

• Eine zweite Klebemasseschicht C; und

• wenigstens eine elektrisch leitfähige Trägerschicht T, die zwischen den Schichten D und C angeordnet ist.

**15.** Klebeband nach Anspruch 12, **dadurch gekennzeichnet, dass** es zusätzlich wenigstens die folgenden Schichten umfasst:

• Eine zweite Klebemasseschicht C; und

• wenigstens eine erste elektrisch leitfähige Trägerschicht T, die zwischen den Schichten D und C angeordnet ist; und

• wenigstens eine zweite elektrisch leitfähige Trägerschicht T', die auf der der ersten elektrisch leitfähigen Trägerschicht T gegenüberliegenden Fläche der Klebemasseschicht D angeordnet ist; und

• Eine dritte Klebemasseschicht C', die auf der der ersten Klebemasseschicht D gegenüberliegenden Fläche der zweiten Trägerschicht T' angeordnet ist.

**16.** Verklebter Verbund umfassend wenigstens folgende Schichten:

• Ein erstes Substrat A; und

• Ein zweites Substrat B; und

• Ein Klebeband nach einem der Ansprüche 12 bis 15, welches zwischen dem Substrat A und dem Substrat B angeordnet ist und die Substrate A und B miteinander verklebt, wobei insbesondere entweder das Substrat A und das Substrat B oder wenigstens eines der Substrate und das Klebeband oder keines der Substrate und das Klebeband an zwei verschiedenen Stellen elektrisch leitfähig ausgestaltet sind.

**17.** Verfahren zum elektrischen Lösen des Verbundes nach Anspruch 16, umfassend wenigstens folgende Verfahrensschritte:

i.) Anlegen einer Spannung an zwei verschiedenen Stellen des Verbundes, wobei die Spannung bevorzugt von 2 bis 50 V, besonders bevorzugt 2 bis 12 V, beträgt.

**19.** Verwendung der Klebemasse gemäß einem der Ansprüche 1 bis 11 zur Verklebung von Bauteilen in elektronischen Geräten, Automobilen, medizinischen Geräten und zahnmedizinischen Geräten.

Fig. 1

$\longleftarrow$ 1

$\longleftarrow$ 2

$\longleftarrow$ 3

Fig. 2

$\longleftarrow$ 1

$\longleftarrow$ 2

$\longleftarrow$ 3

2a

Fig. 3

2a

$\longleftarrow$ 1

$\longleftarrow$ 2

$\longleftarrow$ 3

Fig. 4

Fig. 5

Fig. 6

← 4

2a

← 1

← 2

← 3

← 5

Fig. 7

← 4

← 3

← 2

2a

6a

← 1

← 6

← 7

← 5

Fig. 8

**EUROPÄISCHER RECHERCHENBERICHT**

Europäisches Patentamt
European Patent Office
Office européen des brevets

Nummer der Anmeldung

EP 24 19 0805

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2022 104817 A1 (TESA SE [DE]) 7. September 2023 (2023-09-07) | 1,4-7, 12-14, 16,17 | INV. C09J133/24 |
| Y | * Anspruch 1 * * Absatz [0064] - Absatz [0068] * * Absatz [0009] * ----- | 15,18 | |
| X | KR 2023 0073226 A (LINTEC CORP [JP]) 25. Mai 2023 (2023-05-25) | 1-5, 7-12,14, 17 | |
| Y | * Anspruch 1 * * Absatz [0287] * * Beispiel 2; Tabelle 1 * * Absatz [0308] - Absatz [0310] * * Absatz [0312] - Absatz [0323] * * Absatz [0133] * * Absatz [0144] * * Absatz [0079] * ----- | 15 | |
| Y | CN 118 043 424 A (NITTO DENKO CORP) 14. Mai 2024 (2024-05-14) * Anspruch 1 * * Absatz [0279] - Absatz [0282] * * Absatz [0074] * * Absatz [0086] * * Abbildung 3 * * Absatz [0392] - Absatz [0398] * ----- | 15,18 | |

**RECHERCHIERTE SACHGEBIETE (IPC)**

C09J

Der vorliegende Recherchenbericht wurde für alle Patentansprüche erstellt

| Recherchenort | Abschlußdatum der Recherche | Prüfer |
|---|---|---|
| Den Haag | 9. Januar 2025 | Flores de Paco, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 19 0805

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-01-2025

| Im Recherchenbericht angeführtes Patentdokument | Datum der Veröffentlichung | Mitglied(er) der Patentfamilie | Datum der Veröffentlichung |
|---|---|---|---|
| DE 102022104817 A1 | 07-09-2023 | CN 118786156 A<br>DE 102022104817 A1<br>EP 4486807 A1<br>WO 2023165966 A1 | 15-10-2024<br>07-09-2023<br>08-01-2025<br>07-09-2023 |
| KR 20230073226 A | 25-05-2023 | CN 116194542 A<br>JP WO2022065483 A1<br>KR 20230073226 A<br>TW 202223029 A<br>WO 2022065483 A1 | 30-05-2023<br>31-03-2022<br>25-05-2023<br>16-06-2022<br>31-03-2022 |
| CN 118043424 A | 14-05-2024 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3031875 B1
- WO 2023175424 A1

- EP 0355622 A2

**In der Beschreibung aufgeführte Nicht-Patentliteratur**

- *CHEMICAL ABSTRACTS*, 2530-83-8
- *CHEMICAL ABSTRACTS*, 2602-34-8
- *CHEMICAL ABSTRACTS*, 65799-47-5
- *CHEMICAL ABSTRACTS*, 2897-60-1
- *CHEMICAL ABSTRACTS*, 86138-01-4
- *CHEMICAL ABSTRACTS*, 3388-04-3
- *CHEMICAL ABSTRACTS*, 10217-34-2
- *CHEMICAL ABSTRACTS*, 220520-33-2
- *CHEMICAL ABSTRACTS*, 3068-78-8
- *CHEMICAL ABSTRACTS*, 26495-91-0
- *CHEMICAL ABSTRACTS*, 13822-56-5

- *CHEMICAL ABSTRACTS*, 919-30-2
- *CHEMICAL ABSTRACTS*, 3179-76-8
- *CHEMICAL ABSTRACTS*, 5089-72-5
- *CHEMICAL ABSTRACTS*, 2530-86-1
- *CHEMICAL ABSTRACTS*, 7538-44-5
- *CHEMICAL ABSTRACTS*, 24615-84-7
- *CHEMICAL ABSTRACTS*, 1330-20-7
- *CHEMICAL ABSTRACTS*, 123-42-2
- *CHEMICAL ABSTRACTS*, 62-53-3
- *CHEMICAL ABSTRACTS*, 108-87-2